# EUROPEAN PATENT APPLICATION

(11) **EP 4 626 067 A1**
(43) Date of publication of application: **01.10.2025**
(21) Application number: 23916735.6
(22) Date of filing: 18.01.2023
(51) Int. Cl.: H04W 24/10, H04L 5/00

(54) **MEASUREMENT RESULT REPORTING METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: HU, Rongyi, Dongguan, Guangdong 523860 (CN); ZHANG, Jinyu, Dongguan, Guangdong 523860 (CN)
(74) Representative: Taor, Simon Edward William
(86) International application number: PCT/CN2023/072899
(87) International publication number: WO 2024/152248

(57) **Abstract**

Provided in the embodiments of the present application are a measurement result reporting method and apparatus, and a device and a storage medium. The method comprises: a terminal device reporting to a network device a first measurement result and first information, wherein the first information is used for determining the validity of the first measurement result, and the first measurement result is a measurement result of a measurement which is performed by the terminal device in an idle state or an inactive state.

## Description

### TECHNICAL FIELD

Embodiments of the present disclosure relate to the technical field of mobile communications, in particular to, a method and apparatus for measurement result reporting, a device and a storage medium.

### BACKGROUND

Radio Resource Control (RRC) of a terminal device includes three modes: an RRC_IDLE mode, i.e. an idle mode; an RRC_INACTIVE mode, i.e. an inactive mode; and an RRC_CONNECTED mode, i.e. a connected mode.

To perform cell reselection by the terminal device or perform Carrier Aggregation (CA)/Dual Connectivity (DC) configuration for the terminal device, the terminal device performs measurements in the RRC_IDLE mode or the RRC _INACTIVE mode, and reports measurement results to a network device after entering the RRC_CONNECTED mode. In the related art, it is not determined how to perform validity of the measurement results in the RRC _ IDLE mode or the RRC _ INACTIVE mode.

### SUMMARY

Embodiments of the present disclosure provide a method and apparatus for measurement result reporting, a device, and a storage medium.

The embodiments of the present disclosure provide a method for measurement result reporting, which includes following operation.

A terminal device reports a first measurement result and first information to a network device. The first measurement result and the first information are used for determining a target measurement result, the target measurement result is a valid measurement result, and the first measurement result is a measurement result of measurement performed by the terminal device in an idle mode or an inactive mode.

The embodiments of the present disclosure provide a method for measurement result reporting, which includes following operation.

A terminal device reports a target measurement result to a network device. The target measurement result is determined based on a first measurement result and first information, the first measurement result is a measurement result of measurement performed by the terminal device in an idle mode or an inactive mode, and the target measurement result is a valid measurement result.

The embodiments of the present disclosure provide a method for measurement result reporting, which includes following operation.

A network device receives a first measurement result and first information reported by a terminal device. The first measurement result and the first information are used for determining a target measurement result, the target measurement result is a valid measurement result, and the first measurement result is a measurement result of measurement performed by the terminal device in an idle mode or an inactive mode.

The embodiments of the present disclosure provide a method for measurement result reporting, which includes following operation.

A network device receives a target measurement result reported by a terminal device. The target measurement result is determined based on a first measurement result and first information, the first measurement result is a measurement result of measurement performed by the terminal device in an idle mode or an inactive mode, and the target measurement result is a valid measurement result.

The embodiments of the present disclosure provide an apparatus for measurement result reporting, which includes a first reporting unit.

The first reporting unit is configured to report a first measurement result and first information to a network device. The first measurement result and the first information are used for determining a target measurement result, the target measurement result is a valid measurement result, and the first measurement result is a measurement result of measurement performed by a terminal device in an idle mode or an inactive mode.

The embodiments of the present disclosure provide an apparatus for measurement result reporting, which includes a second reporting unit.

The second reporting unit is configured to report a target measurement result to a network device. The target measurement result is determined based on a first measurement result and first information, the first measurement result is a measurement result of measurement performed by a terminal device in an idle mode or an inactive mode, and the target measurement result is a valid measurement result.

The embodiments of the present disclosure provide an apparatus for measurement result reporting, which includes a first receiving unit.

The first receiving unit is configured to receive a first measurement result and first information reported by a terminal device. The first measurement result and the first information are used for determining a target measurement result, the target measurement result is a valid measurement result, and the first measurement result is a measurement result of measurement performed by the terminal device in an idle mode or an inactive mode.

The embodiments of the present disclosure provide an apparatus for measurement result reporting, which includes a second receiving unit.

The second receiving unit is configured to receive a target measurement result reported by a terminal device. The target measurement result is determined based on a first measurement result and first information, the first measurement result is a measurement result of measurement performed by the terminal device in an idle mode or an inactive mode, and the target measurement result is a valid measurement result.

A communication device provided by the embodiments of the present disclosure may be the terminal device in the above scheme, and the communication device includes a processor and a memory. The memory is configured to store a computer program, and the processor is configured to invoke and execute the computer program stored in the memory to perform the methods for measurement result reporting performed by the terminal device.

A communication device provided by the embodiments of the present disclosure may be the network device in the above scheme, and the communication device includes a processor and a memory. The memory is configured to store a computer program, and the processor is configured to invoke and execute the computer program stored in the memory to perform the methods for measurement result reporting performed by the network device.

A chip provided by the embodiments of the present disclosure is configured to implement the above methods for measurement result reporting.

Specifically, the chip includes a processor. The processor is configured to invoke and execute a computer program from a memory, to enable a device installed with the chip to perform the above methods for measurement result reporting.

A computer-readable storage medium provided by the embodiments of the present disclosure is configured to store a computer program. The computer program causes a computer to perform the above methods for measurement result reporting.

A computer program product provided by the embodiments of the present disclosure includes computer program instructions that cause a computer to perform the above methods for measurement result reporting.

A computer program provided by the embodiments of the present disclosure causes a computer to perform the above methods for measurement result reporting when being execute on the computer.

According to the above technical solutions, the terminal device reports a first measurement result and first information to the network device, where the first measurement result and the first information are used for determining a target measurement result, the target measurement result is a valid measurement result, and the first measurement result is a measurement result of measurement performed by the terminal device in an idle mode or an inactive mode. In this way, the network device can determine the valid measurement result.

### BRIEF DESCRIPTION OF THE DRAWINGS

The accompanying drawings described herein are intended to provide a further understanding of the present disclosure and constitute a part of the present disclosure. The schematic embodiments of the present disclosure and the description thereof are intended to explain the present disclosure, and do not constitute an undue limitation of the present disclosure. In the drawings:
FIG. 1 is a first schematic diagram of an application scenario to which an embodiment of the present disclosure is applied.
FIG. 2 is an optional flowchart of measurement result reporting according to an embodiment of the present disclosure.
FIG. 3 is a second schematic diagram of an application scenario to which an embodiment of the present disclosure is applied.
FIG. 4 is an optional relationship diagram of mode transition according to an embodiment of the present disclosure.
FIG. 5 is an optional schematic diagram of an idle measurement configuration according to an embodiment of the present disclosure.
FIG. 6 is a first optional flowchart of a method for measurement result reporting according to an embodiment of the present disclosure.
FIG. 7 is a second optional flowchart of a method for measurement result reporting according to an embodiment of the present disclosure.
FIG. 8 is a third optional flowchart of a method for measurement result reporting according to an embodiment of the present disclosure.
FIG. 9 is a schematic diagram of an optional measurement time of a third measurement result according to an embodiment of the present disclosure.
FIG. 10 is a schematic diagram of an optional measurement time of a fourth measurement result according to an embodiment of the present disclosure.
FIG. 11 is a fourth optional schematic diagram of a method for measurement result reporting according to an embodiment of the present disclosure.
FIG. 12 is fifth optional schematic diagram of a method for measurement result reporting according to an embodiment of the present disclosure.
FIG. 13 is sixth optional schematic diagram of a method for measurement result reporting according to an embodiment of the present disclosure.
FIG. 14 is a first optional structural schematic diagram of an apparatus for measurement result reporting according to an embodiment of the present disclosure.
FIG. 15 is a second optional structural schematic diagram of an apparatus for measurement result reporting according to an embodiment of the present disclosure.
FIG. 16 is a third optional structural schematic diagram of an apparatus for measurement result reporting according to an embodiment of the present disclosure.
FIG. 17 is a fourth optional structural schematic diagram of an apparatus for measurement result reporting according to an embodiment of the present disclosure.
FIG. 18 is a schematic structural diagram of a communication device according to an embodiment of the present disclosure.
FIG. 19 is a schematic structural diagram of a chip according to an embodiment of the present disclosure.
FIG. 20 is a schematic block diagram of a communication system according to an embodiment of the present disclosure.

### DETAILED DESCRIPTION

The technical solutions in the embodiments of the present disclosure will be described below with reference to the accompanying drawings in the embodiments of the present disclosure. It is apparent that the described embodiments are not all embodiments but only part of embodiments of the present disclosure. All other embodiments obtained by those of ordinary skill in the art on the basis of the embodiments in the present disclosure without creative work shall fall within the scope of protection of the present disclosure.

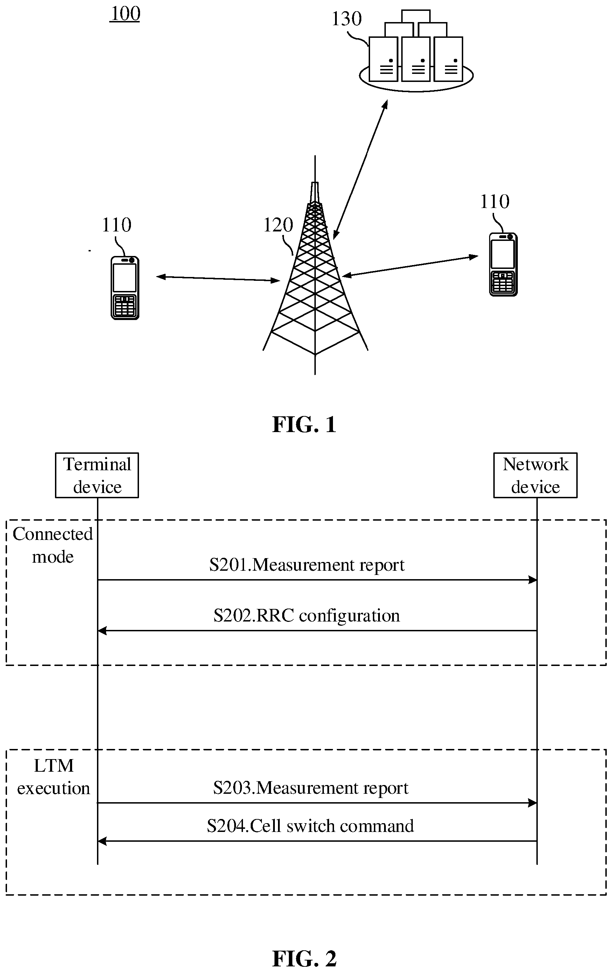

FIG. 1 is a schematic diagram of an application scenario to which an embodiment of the present disclosure is applied.

As illustrated in FIG. 1, the communication system 100 may include terminal devices 110 and a network device 120. The network device 120 may communicate with the terminal device 110 through an air interface. Multi-service transmission is supported between the terminal device 110 and the network device 120.

It should be understood that the embodiments of the present disclosure are only exemplarily described with reference to the communication system 100, but the embodiments of the present disclosure are not limited thereto. That is, the technical solutions of the embodiments of the present disclosure may be applied to various communication systems, such as a Long Term Evolution (LTE) system, a LTE Time Division Duplex (TDD), an Universal Mobile Telecommunications System (UMTS), an Internet of Things (IoT) system, a Narrow Band Internet of Things (NB-IoT) system, an enhanced Machine-Type Communications (eMTC) system, a 5G communication system (also referred to as a New Radio (NR) communication system), or a future communication system, etc.

In the communication system 100 illustrated in FIG. 1, the network device 120 may be an access network device that communicates with the terminal device 110. The access network device may provide communication coverage for a particular geographic area and may communicate with a terminal device 110 (e.g., User equipment (UE)) located within the coverage.

The network device 120 may be an Evolved Node B (eNB or eNodeB) in the LTE system, a Next Generation Radio Access Network (NG RAN) device, a base station (gNB) in the NR system, or a wireless controller in a Cloud Radio Access Network (CRAN), or the network device 120 may be a relay station, an access point, a vehicle-mounted device, a wearable device, a hub, a switch, a bridge, a router, or a network device in a future evolved Public Land Mobile Network (PLMN), etc.

The terminal device 110 may be any terminal device, which includes, but is not limited to, a terminal device connected to the network device 120 or another terminal device via a wired or wireless connection.

For example, the terminal device 110 may be referred to as an access terminal, a UE, a subscriber unit, a subscriber station, a mobile station, a mobile radio station, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device having a wireless communication function, a computing device or other processing device connected to a wireless modem, a vehicle-mounted device, a wearable device, a terminal device in a 5G network or a terminal device in a future evolution network, etc.

The terminal device 110 may be used for Device to Device (D2D) communication.

The wireless communication system 100 may also include a core network device 130 that communicates with the base station. The core network device 130 may be a 5G Core (5GC) device, for example, an Access and Mobility Management Function (AMF), an Authentication Server Function (AUSF), a User Plane Function (UPF), and a Session Management Function (SMF). In an embodiment, the core network device 130 may also be an Evolved Packet Core (EPC) device in the LTE network, for example, a Session Management Function + Core Packet Gateway (SMF+PGW-C) device. It should be understood that SMF+PGW-C may simultaneously achieves the functions that SMF and PGW-C may perform. During the evolution of the network, the core network device may also be called other names or form a new network entity by dividing the functions of the core network, which is not limited by the embodiments of the present disclosure.

The various functional units in the communication system 100 may also communicate with each other by establishing connections via the next generation network (NG) interface.

For example, the terminal device establishes an air interface connection with the access network device via a Uu interface for transmission of user-plane data and control-plane signaling. The terminal device may establish a control-plane signaling connection to the AMF via a NG interface 1 (referred to as N1 for short). The access network device, such as a gNB, may establish a user-plane data connection to the UPF via a NG interface 3 (referred to as N3 for short). The access network device may establish a control-plane signaling connection to the AMF via a NG interface 2 (referred to as N2 for short). The UPF may establish a control-plane signaling connection to the SMF via a NG interface 4 (referred to as N4 for short). The UPF may interact with the data network for user-plane data via a NG interface 6 (referred to as N6 for short). The AMF may establish a control-plane signaling connection to the SMF via a NG interface 11 (referred to as N11 for short). The SMF may establish a control plane signaling connection with the PCF via a NG interface 7 (referred to as N7 for short).

FIG. 1 exemplarily illustrates one base station, one core network device and two terminal devices. In an embodiment, the wireless communication system 100 may include multiple base stations and another number of terminal devices may be included within the coverage area of each base station, which is not limited in the embodiments of the present disclosure

It should be noted that FIG. 1 merely exemplarily illustrates the system to which the present disclosure is applied, and of course, the method in the embodiments of the present disclosure may also be applied to other systems. Terms "system" and "network" in the present disclosure may usually be interchanged in the present disclosure. In the present disclosure, the term "and/or" is only an association relationship describing associated objects and represents that three relationships may exist. For example, A and/or B may represent three conditions: i.e., independent existence of A, existence of both A and B, and independent existence of B. In addition, character "/" in the present disclosure usually represents that previous and next associated objects form an "or" relationship. It is also to be understood that the term "indication" in embodiments of the present disclosure may be a direct indication, an indirect indication, or an indication of an associative relationship. For example, an indication of B by A may indicate that A directly indicates B, for example, B is obtained through A, or that A indirectly indicates B, for example, A indicates C and B is obtained through C, or that there is an association between A and B. It is also to be understood that the term "correspondence" in embodiments of the present disclosure may indicate a direct or indirect correspondence between the two elements, or may indicate an association between the two elements, or may indicate a relationship of indicating and being indicated, configuring and being configured, etc. It is also to be understood that the term "predefined" or "predefined rules" in embodiments of the present disclosure may be achieved by pre-storing corresponding codes, tables or other manners for indicating relevant information in devices (e.g., including a terminal device and a network device). The specific implementation is not limited in the present disclosure. For example, "predefined" may refer to those defined in a protocol. It is also to be understood that in embodiments of the present disclosure, "protocol" may refer to a standard protocol in the field of communication, which may include, for example, an LTE protocol, NR protocol and relevant protocol applied in the future communication system, which is not limited in the present disclosure.

To make the technical solutions of the embodiments of the present disclosure to be understood better, the relevant technology of the embodiments of the present disclosure is described below. The following relevant technology as optional solutions may be combined with the technical solutions of the embodiments in any way, and shall fall within the scope of protection of the present disclosure.

In the idle/inactive mode, measurements performed by the terminal device include two cases: measurements for cell selection or cell reselection; and measurements for an early measurement report (EMR) mechanism to achieve rapid reporting, for example, a beam report.

In the related art, measurement reporting is performed as a Layer 1 or Layer 2 (L1/L2) triggered mobility (LTM) procedure illustrated in FIG. 2. In the RRC connected mode, the terminal device reports measurement results based on a measurement reporting message at S201; and the network device determines RRC configuration based on the measurement results, and sends the RRC configuration to the terminal device based on a RRC configuration message at S202. In the LTM execution procedure, the terminal device reports measurement results based on a measurement reporting message at S203, so that the network device sends a cell switch command message at S204 to the terminal device based on the measurement results, to indicate whether the terminal device performs cell switch. It is to be understood that FIG. 2 does not illustrate all signaling included in the LTM procedure.

The RRC modes of the terminal device include: an RRC_IDLE mode, an RRC_CONNECTED mode, and an RRC _INACTIVE mode.

RRC_IDLE mode: mobility is UE-based cell selection/ reselection, paging is initiated by a Core Network (CN), a paging area is configured by the CN, and there is no UE Access Stratum (AS) context at the base station side. There is no RRC connection between the UE and the base station, and there is no RRC connection between the base station and the core network.

RRC_CONNECTED mode: there is a RRC connection between the UE and the base station, there is a RRC connection between the UE and the core network. The base station and the UE have UE AS context. The network side knows that the position of the UE is at a cell level, Mobility is controlled by the network side; and unicast data may be transmitted between the UE and the base station.

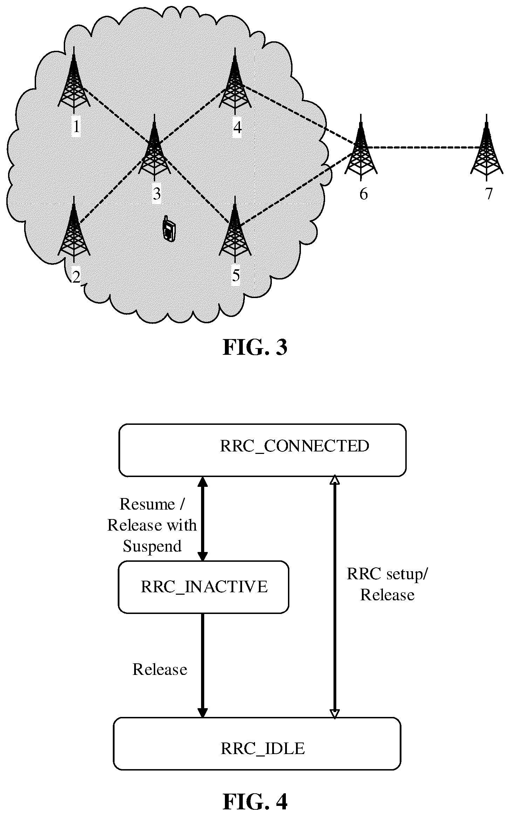

RRC _INACTIVE mode: mobility is UE-based cell selection/ reselection, there is a RRC connection between the CN and the base station (CN-NR), and the RRC connection between the UE and the base station is suspended; UE AS context exists on a certain base station, paging is triggered by a Radio Access Network (RAN), a RAN-based paging area is managed by the RAN, and the network side knows that the position of the UE is at an RAN-based paging area level. As illustrated in FIG. 3, there is a RRC connection between the base station 1 to the base station 7, the RRC connection between the UE and the base station is suspended, without transmission of data services.

The network device may control RRC mode transition or transfer of the UE. The RRC mode transition of the UE is as illustrated in FIG. 4, the RRC mode is the connected mode, the UE transitions to be in the inactive mode when the RRC connection is released with suspend; and the UE transitions to be in the idle mode when the RRC connection is released. The RRC mode is the idle mode, then the UE transitions to be in the connected mode when the RRC is setup. The RRC mode is the inactive mode, the UE transitions to be in the connected mode when the RRC connection is resumed; and the UE transitions to be in the idle mode when the RRC connection is released.

The RRC mode is the inactive mode, and the UE autonomously returns to be in the idle mode in one of the following cases:
- reception of an initial paging message from the CN;
- expiry of a timer T319 started when the RRC resume request is initiated;
- MSG4 integrity protection verification failure;
- cell reselection to other Radio Access Technologies (RAT); and
- entering a mode of not camp on any cell.

The characteristics of the RRC_INACTIVE mode include:
- a connection between the RAN and the CN is maintained;
- the UE and at least one gNB store AS context;
- the UE is accessible for the RAN side, and relevant parameters are configured by the RAN;
- when the UE moves within an RAN Notification Area (RNA) configured by the RAN, it is not necessary to notify the network side, but when the UE moves out of the RNA, it is necessary to notify the network side; and
- the UE moves within the RNA in a cell selection/reselection mode.

When the UE in the RRC_CONNECTED mode transitions to be in the RRC _INACTIVE mode, the network side configures RRC _INACTIVE configuration parameters for the UE through RRC Release dedicated signaling. The RRC _INACTIVE configuration parameters include: an inactivated-Radio Network TemporaryIdentifier (I-RNTI), a RNA, a RAN Discontinuous Reception (DRX) cycle, and a RNA update cycle (RNAU) periodicity. The I-RNTI is used for identifying UE inactive context at the base station side, and is unique within the base station. The RNA is used for controlling the area where the UE in the inactive mode performs cell selection/reselection, and is also the paging range area of the RAN initial paging. The RAN DRX cycle is used for calculating a paging occasion of the RAN initial paging. The RNAU periodicity is used for controlling a period for the UE to perform periodic RAN location update.

When the UE moves within the RNA area, the UE does not need to notify the network side, and follows the mobility behavior in the idle mode, i.e., the principle of cell selection/reselection. When the UE moves out of the paging area configured by the RAN, the UE is triggered to resume the RRC connection and re-acquire the paging area configured by the RAN. When downlink data arrives to the UE, the gNB that maintains the connection between the RAN and the CN for the UE may trigger all cells within the RAN paging area to send paging messages to the UE, so that the UE in the INACTIVCE mode may resume the RRC connection and perform data reception. The UE in the inactive mode is configured with a RAN paging area. In order to ensure the accessibility of the UE in this area, the UE is required to perform periodic location update according to the periodicity configured by the network.

Therefore, the UE enters into the connected mode from the inactive mode in the following three cases.
Case 1: downlink data arrives to the UE, and the network side initiates RAN initial paging, which prompts the UE to enter into the connected mode;
Case 2: the UE itself initiates RAN location area update, such as, periodic RAN location update or cross-area location update.
Case 3: the UE needs to perform uplink data transmission, which prompts the UE to enter into the connected mode.

The neighbor cell measurement behaviors of the UE in the idle mode and in the inactive mode are constrained by related parameters in a system broadcast message.

For example, for initiation of an intra-frequency measurement, when Srxlev of the serving cell is greater than an intra-frequency measurement initiation Reference Signal Received Power (RSRP) threshold (SIntraSearchP) and Squal of the serving cell is greater than an intra-frequency measurement initiation Reference Signal Received Quality (RSRQ) threshold (SIntraSearchQ), no intra-frequency neighbor cell measurement is initiated; otherwise, an intra-frequency neighbor cell measurement is initiated. Srxlev is a cell selection RSRP-related S value in units of decibels (dB), and Squal is a cell selection RSRQ-related S value in units of dB.

For an inter-frequency measurement with the same/low priority, when Srxlev of the serving cell is greater than an inter-frequency/inter-system measurement initiation RSRP threshold (SnonIntraSearchP) and Squal of the serving cell is greater than an inter-frequency/inter-system measurement initiation RSRQ threshold (SnonIntraSearchQ), no inter-frequency measurement with the same/low priority is not initiated; otherwise, the inter-frequency measurement with the same/low priority is initiated.

The measurement on high-priority inter-frequency measurements is always initiated.

For an idle-mode UE measurement, the idle-mode measurement configuration, i.e., the idle measurement configuration, may be configured in the RRC release message, and the idle measurement configuration may be configured in the System Information Block (SIB) 5 broadcasted by the system. If there is a dedicated idle measurement configuration, then the dedicated idle measurement configuration is used; otherwise, the idle measurement configuration in the SIB5 is used. Moreover, there is no validity time limit for the idle measurement configuration in the SIB5. The idle measurement configuration is configured in dedicated signaling, and the validity time configuration, i.e., T331 (measidleDuration), is also configured in the dedicated signaling. When T331 has expired or stopped, the idle measurement configuration configured in the dedicated signaling is released, and whether the UE continues to use the idle measurement configuration in the SIB5 is dependent on UE implementation.

After acquiring the idle measurement configuration, the UE performs measurements based on the idle measurement configuration, indicates to the network side in an Uplink (UL) message that there are idle measurement results, and then performs reporting based on a request from the base station. The cell may also broadcast in the SIB2 whether the cell supports reporting of the idle-mode measurement results.

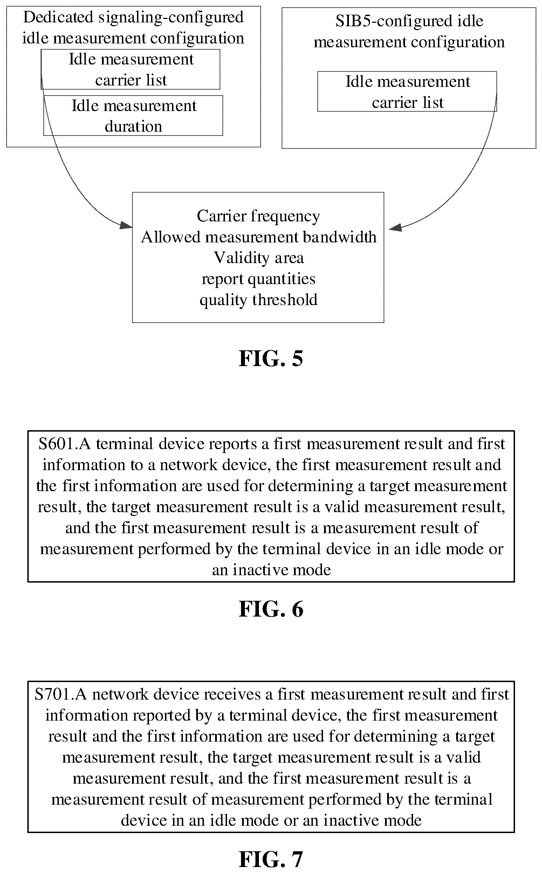

As illustrated in FIG. 5, dedicated signaling-configured idle measurement configuration includes: an idle measurement carrier list and an idle measurement duration, i.e., validity time of the dedicated idle measurement configuration. SIB5-configured idle measurement configuration includes an idle measurement carrier list. The idle measurement carrier list includes the following information: a carrier frequency (carrierFreq), an allowed measurement bandwidth (allowedMeasBandwidth), a validity area (validityArea), a measurement cell list (measCellList), report quantities (reportQuantities), and a quality threshold (qualityThreshold). carrierFreq and allowedMeasBandwidth indicate frequency points to be measured and measurement bandwidths. validity Area configures a validity coverage of the idle measurement configuration, which is a cell list. If the UE reselects to a cell outside the validityArea, the timer T331 stops. measCellList indicates cells to be reported in the measurement configuration, and other cells are not reported. If measCellList is not configured, the UE reports cells meeting the qualityThreshold, with the number of reported cells not exceeding the maximum number of cells for idle measurements (maxCellMeasidle). The measurement quantities to be reported are specified by reportQuantities.

In the related art, enhancements on UE behavior in IDLE/INACTIVE mode are not discussed, and the measurement, i.e. using at least one measurement result obtained during IDLE/INACTIVE mode for measurements during RRC connection procedure, is studied from the following aspects.

The following are several directions in the discission, but they are all rough and do not discuss the validation of measurement results.

For the first direction, a UE performs validation of available measurements during RRC setup/resume which may continue in connected mode. At MO or MT RRC setup/resume initiation, the UE initiates validation of measurements. UE EMR measurements and any other available idle/inactive mode measurements for non-EMR UEs may be used. The UE reports the result of the validation (validated measurements) to the network.

For the second direction, for a UE with EMR measurement, the possible improved measurement during RRC setup/resume may be performed with the following assumptions:
the UE has acquired most samples during idle/inactive mode;
prior EMR measurement samples are not outdated;
prior EMR measurement samples and RX beam are stored in the UE;
no beam sweeping is performed during RRC setup/resume procedure; and
the above applicable scenario is very limited and highly depends on UE implementation.

For the third direction, the enhanced measurement is applicable to scenarios that EMR measurement results are available but invalid and it will focus on the carriers that have been measured in early measurement. Herein, the available measurement results may be understood as measurement results that can be reported.

In order to facilitate understanding of the technical solutions of the embodiments of the present disclosure, the technical solutions of the present disclosure will be described in detail below with reference to specific examples. The above relevant technology as optional solutions may be combined with the technical solutions of the embodiments in any way, and shall fall within the scope of protection of the embodiments of the present disclosure. The embodiments of the present disclosure include at least part of the following contents.

The method for measurement result reporting provided by the embodiments of the present disclosure is applied to a terminal device, and as illustrated in FIG. 6, the method includes the following operation in S601.

In S601, a terminal device reports a first measurement result and first information to a network device, where the first measurement result and the first information are used for determining a target measurement result, the target measurement result is a valid measurement result, and the first measurement result is a measurement result of measurement performed by the terminal device in an idle mode or an inactive mode.

The method for measurement result reporting provided by the embodiments of the present disclosure is applied to a network device, and as illustrated in FIG. 7, the method includes the following operation in S701.

In S701, a network device receives a first measurement result and first information reported by a terminal device, where the first measurement result and the first information are used for determining a target measurement result, the target measurement result is a valid measurement result, and the first measurement result is a measurement result of measurement performed by the terminal device in an idle mode or an inactive mode.

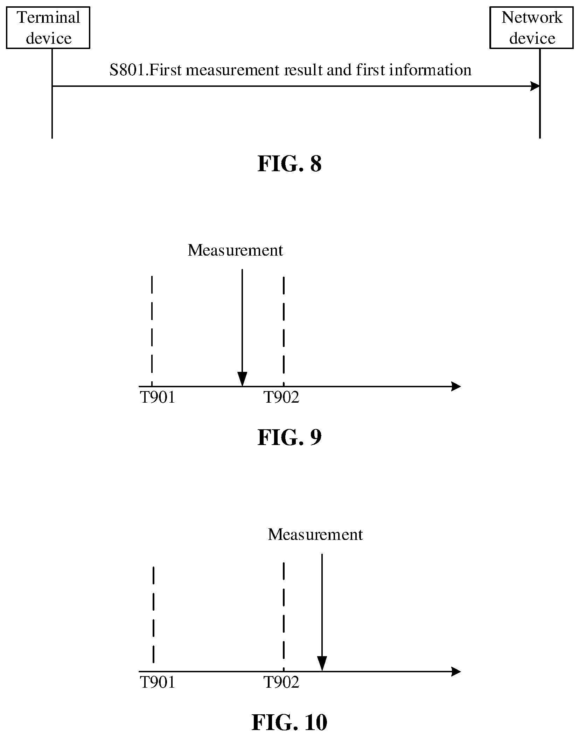

The method for measurement result reporting provided by the embodiments of the present disclosure is applied to a wireless communication system including a terminal device and a network device, and as illustrated in FIG. 8, the method includes the following operation in S801.

In S801, a terminal device reports a first measurement result and first information to a network device.

The first measurement result and the first information are used for determining a target measurement result, the target measurement result is a valid measurement result, and the first measurement result is a measurement result of measurement performed by the terminal device in an idle mode or an inactive mode.

The methods for measurement result reporting illustrated in FIG. 6 to FIG. 8 provided by the embodiments of the present disclosure will be described below.

The terminal device in the idle or inactive mode performs measurement to obtain the first measurement result. It is to be understood that the terminal device may perform multiple measurements, and one first measurement result is obtained for each measurement. It is to be understood that the terminal device may report at least one first measurement result.

After the terminal device enters the connected mode from the idle mode or from the inactive mode based on the access, the terminal device reports the first measurement result to the network device. It is to be understood that the access may be understood as an access procedure performed when the terminal device transitions to be in the connected mode from the idle mode or from the inactive mode, and includes random access, initial access, and the like. If the terminal device enters the connected mode from the idle mode, the terminal also performs connection setup during the access procedure. If the terminal device enters the connected mode from the inactive mode, the terminal also performs connection resume during the access procedure.

When the first measurement result is obtained, the terminal device determines the first information and sends the first information to the network device.

When the network device receives the first measurement result and the first information, the network device determines a valid measurement result, i.e., target measurement result, based on the first measurement result and the first information. It is to be understood that the target measurement result is used for cell selection/reselection, or, CA/DC configuration.

In the method for measurement result reporting according to the embodiments of the present disclosure, the terminal device reports the first measurement result and first information to the network device, where the first measurement result and the first information are used for determining a target measurement result, the target measurement result is a valid measurement result, and the first measurement result is a measurement result of measurement performed by the terminal device in the idle or inactive mode. In this way, the network device can determine the valid measurement result based on the first information.

In some embodiments, the first information includes at least one of information 1 or information 2.

Information 1: a second measurement result determined based on a third measurement result and/or a fourth measurement result. The third measurement result is a measurement result of measurement performed by the terminal device in an RRC setup/resume procedure, and the fourth measurement result is a measurement result of measurement performed by the terminal device after the RRC setup/resume procedure is completed.

Information 2: first indication information. The first indication information is used for indicating validation of the first measurement result.

For information 1, the second measurement result may include one or both of the third measurement result and the fourth measurement result.

If the second measurement result includes the third measurement result, the terminal device performs measurement(s) in the RRC setup/resume procedure to obtain the third measurement result. It is to be understood that the terminal device performs at least one measurement in the RRC setup/resume procedure to obtain at least one third measurement result. The terminal device may report the at least one third measurement result to the network device.

In an example, as illustrated in FIG. 9, the terminal device starts performing the RRC setup/resume procedure at time T901, and completes the RRC setup/resume procedure and enters the connected mode at time T902. The terminal device performs at least one measurement between T901 and T902 to obtain at least one third measurement result.

It is to be understood that the terminal device performs measurements between message 1 (msg1) to message 4 (msg4) in the access procedure to obtain at least one third measurement result. If the access procedure performed by the terminal device is two-step access, the measurements are performed between message A and message B. The message A includes the message 1 and message 3, and the message B includes the message 2 and message 4.

For the third measurement result, in the RRC setup/resume procedure, if the terminal device does not transition to be in the connected mode, the third measurement result is a measurement result in the access procedure where the terminal device is in the idle mode. The terminal device may effectively determine the stability of the terminal device based on the third measurement result and the first measurement result, thereby determining the validation of the first measurement result. In the case that the terminal device is stable, the first measurement result is valid; otherwise, the first measurement result is invalid.

In some embodiments, the measurement accuracy requirement of the third measurement result still satisfies the measurement accuracy requirement in the idle or inactive mode.

In some embodiments, the third measurement result is a measurement result of measurement performed by the terminal device based on a first measurement configuration.

When the terminal device performs measurement in the connection setup/resume procedure, the terminal device performs the measurement based on the first measurement configuration to obtain the third measurement result.

The first measurement configuration may include at least one of the following configuration information: carrier frequency points to be measured, an allowed measurement bandwidth, a validity area, report quantities, or a quality threshold.

In some embodiments, the first measurement configuration includes at least one of: an idle measurement configuration; an EMR measurement configuration; or a second measurement configuration that is a measurement configuration configured in the RRC setup/resume procedure.

The idle measurement configuration is a measurement configuration for measurements in the idle mode.

The EMR measurement configuration is a measurement configuration for the EMR.

It is to be understood that a carrier frequency in the idle measurement configuration is different from that in the EMR measurement configuration.

The second measurement configuration is a measurement configuration, configured by the network device for the terminal device, for performing an measurement when the terminal device determines to perform the measurement in the RRC connection setup/resume procedure.

It is to be understood that the measurement performed by the terminal device based on the second measurement configuration may be understood as one shot measurement.

If the first measurement configuration is the idle measurement configuration, the terminal device continues to adopt the measurement configuration used for the measurement corresponding to the first measurement result. It is to be understood that the terminal device does not need to switch the measurement configuration.

If the first measurement configuration is the idle measurement configuration or the second measurement configuration, the measurement configuration used by the terminal device is different from the measurement configuration used for the measurement corresponding to the first measurement result. It is to be understood that the terminal device needs to switch the measurement configuration.

If the second measurement result includes the fourth measurement result, the terminal device performs measurement after the RRC setup/resume procedure, i.e., after the RRC setup/resume procedure is completed, to obtain the fourth measurement result.

In an example, as illustrated in FIG. 10, the terminal device starts performing the RRC setup/resume procedure at T901, and completes the RRC setup/resume procedure and enters the connected mode at T902; and the terminal device performs at least one measurement after T902 to obtain at least one fourth measurement result.

It is to be understood that the terminal device performs measurement after the message 4 in the access procedure to obtain the fourth measurement result. If the access procedure performed by the terminal device is two-step access, the measurements are performed after the message B.

For the fourth measurement result, after the RRC setup/resume procedure is completed, if the terminal device transitions to be in the connected mode, the fourth measurement result is a measurement result in the access procedure where the terminal device is in the connected mode. It is to be understood that the terminal device performs at least one measurement after entering the connected mode, to obtain at least one fourth measurement result. The terminal device may report the at least one fourth measurement result to the network device.

In some embodiments, the fourth measurement result is a measurement result of measurement performed by the terminal device based on a third measurement configuration.

When the terminal device performs measurement after the connection setup/resume procedure is completed, the terminal device performs the measurement based on the third measurement configuration to obtain the fourth measurement result.

The second measurement configuration may include at least one of the following configuration information: carrier frequency points to be measured, an allowed measurement bandwidth, a validity area, report quantities, or a quality threshold.

In some embodiments, the third measurement configuration includes at least one of an idle measurement configuration or a connected measurement configuration.

The connected measurement configuration is a measurement configuration for the connected mode.

The terminal device may perform measurement after entering the connected mode by using the idle measurement configuration or the connected measurement configuration, to obtain the fourth measurement result.

If the first measurement configuration is the idle measurement configuration, and in the case that the terminal device does not perform measurements in the RRC setup/resume procedure or the terminal device performs measurements in the RRC setup/resume procedure by using the idle measurement configuration, the terminal device continues to use the measurement configuration used for the measurement corresponding to the first measurement result. It is to be understood that the terminal device does not need to switch the measurement configuration.

If the first measurement configuration is the connected measurement configuration, and in the case that terminal device does not perform measurements in the RRC setup/resume procedure or the terminal device performs measurements in the RRC setup/resume procedure, the terminal device needs to switch the measurement configuration.

In some embodiments, the fourth measurement result is a measurement result for at least one first frequency, and the first frequency is a carrier frequency in an EMR measurement configuration or a frequency of a carrier for Carrier Aggregation (CA) or Dual Connectivity (DC).

In a case that the measurement configuration for the measurements performed by the terminal device after the RRC setup/resume procedure is completed is the idle measurement configuration or the connected measurement configuration, the terminal device may measure only at least one first frequency. That is, only the EMR carrier frequency in the idle mode or the inactive mode or the carrier frequency for the fast setup of the CA/DC may be measured, thereby reducing the number of measurement frequency points and saving power consumption of the terminal device.

In some embodiments, a stop time of a first timer is extended to a first time, or the first timer is restarted when the first timer stops. The first timer is configured to control a valid duration of the idle measurement configuration.

In a case that the terminal device obtains the third measurement result and/or the fourth measurement result by using the idle measurement configuration, the first timer may be caused to be in the running state in the RRC setup/resume procedure and/or after the RRC setup/resume procedure is completed.

The manner of controlling the first timer to be in the running state in the RRC setup/resume procedure and/or after the RRC setup/resume procedure is completed includes at least one of the following two manners: a stop time of the first timer is extended, or the first timer is restarted after the first timer stops.

In the first manner, a timeout time, i.e., the stop time, of the first timer is extended to the first time.

If the first timer is controlled to be in the running state in the RRC setup/resume procedure, the first time is located within the duration of the RRC setup/resume procedure or located after the RRC setup/resume procedure is completed.

If the first timer is controlled to be in the running state after the RRC setup/resume procedure is completed, the first time is located after the RRC setup/resume procedure is completed.

In the second manner, after the first timer stops, the terminal device restarts the first timer until the terminal device completes measurements in the RRC setup/resume procedure and/or measurements after the RRC setup/resume procedure is completed.

The first timer is configured to control the valid duration of the idle measurement configuration. In an example, the first timer is T331.

For information 1, the content of the second measurement result includes one of the following two cases.

In case 1, the second measurement result includes the third measurement result and/or the fourth measurement result.

In case 2, the second measurement result includes the fourth measurement result and/or a fifth measurement result, and the fifth measurement result is determined based on at least one of the third measurement result.

For the case 1, the second measurement result directly includes at least one type of the third measurement result and the fourth measurement result.

For the third measurement result in the case 1, in some embodiments, the third measurement result is used as a reference condition or threshold for determining the validation of the first measurement result; and/or, the third measurement result is combined with the first measurement result.

In the case that the second measurement result includes the third measurement result, the network device may verify the validation of the first measurement result based on the third measurement result, or may combine the first measurement result with the third measurement result. The network device combining the first measurement result with the third measurement result may be understood as the network device combining at least one first measurement result with at least one third measurement result.

Taking the second measurement result including the third measurement result as an example, after receiving the third measurement result, the network device determines whether the first measurement result is valid by using the third measurement result as the reference threshold or threshold and determines a valid first measurement result, i.e., the target measurement result. It is to be understood that the network device determines the fifth measurement result based on the third measurement result, and determines the validation of the first measurement result through the fifth measurement result.

Taking the second measurement result including the third measurement result as an example, after receiving the third measurement result, the network device combines the third measurement result with the first measurement result to determine the target measurement result.

For the case 2, the second measurement result includes at least one type of the fourth measurement result and the fifth measurement result. The fifth measurement result is determined based on at least one third measurement result.

It is to be understood that the fifth measurement result is a part of the at least one third measurement result, or a new measurement result determined based on all or part of the at least one third measurement result.

In an example, the at least one third measurement result includes the following: result 1, result 2, result 3, and result 4. The result 4 having the highest value is the fifth measurement result.

In an example, the third measurement result includes result 1, result 2, result 3, and result 4. The fifth measurement result is a measurement result obtained by performing weighted summation on the result 1, result 2, result 3 and result 4.

In some embodiments, the fifth measurement result is used as a reference condition or threshold for determining the validation of the first measurement result.

After receiving the fifth measurement result, the network device may determine the validation of the first measurement result through the fifth measurement result.

Taking the second measurement result including the fifth measurement result as an example, the network device determines the validation of the first measurement result by using the fifth measurement result as a reference threshold or threshold.

In some embodiments, for the fourth measurement result in the case 1 and case 2, the fourth measurement result is combined with the first measurement result.

After receiving the fourth measurement result, the network device combines the fourth measurement result with the first measurement result.

Taking the second measurement result including at least one fourth measurement result as an example, the network device combines at least one first measurement result with the at least one fourth measurement result to obtain the target measurement result.

Taking the second measurement result including the third measurement result and the fourth measurement result as an example, the network device determines a valid first measurement result among the at least one reported first measurement result based on the third measurement result, and combines the valid first measurement result with the fourth measurement result to obtain the target measurement result.

Taking the second measurement result including the third measurement result and the fourth measurement result as an example, the network device combines the first measurement result, the third measurement result and the fourth measurement result to obtain the target measurement result.

Taking the second measurement result including the fifth measurement result and the fourth measurement result as an example, the network device determines a valid first measurement result among the at least one reported first measurement result based on the fifth measurement result, and combines the valid first measurement result with the fourth measurement result to obtain the target measurement result.

For information 2, the terminal device determines the validation of the first measurement result, and sends to the network device the first indication information as an assistant indication for assisting in determining the validation of the first measurement result. The network device determines the validation of the received first measurement result based on the received first indication information.

It is to be understood that the number of the first indication information included in the first information may be the same as the number of reported first measurement results, so that the validation of the different first measurement results may be indicated through different first indication information.

In some embodiments, the first indication information is determined based on a first condition for determining the validation of the first measurement result.

The terminal device determines the first indication information based on the first condition and the first measurement result, and sends the first indication information to the network device.

In some embodiments, the first indication information is reported to the network device through the message 1 or message 3. When the access procedure is two-step access, the first indication information is reported to the network device through the message A.

In some embodiments, if the terminal device satisfies the first condition, the first indication information indicates that the first measurement result is valid; or, if the terminal device does not satisfy the first condition, the first indication information indicates that the first measurement result is invalid.

In some embodiments, the first condition includes at least one of the following conditions A-F.

Condition A: the terminal device satisfies a low mobility evaluation criterion.

Condition B: the terminal device satisfies a cell edge criterion.

Condition C: the terminal device satisfies a channel quality criterion.

Condition D: whether a Reference Signal Received Power (RSRP) of the terminal device satisfies a preset RSRP threshold for determining measurement validation.

Condition E: whether a timeout duration of the first timer of the terminal device satisfies a first duration threshold, where the first timer is configured to control an available duration of the idle measurement configuration.

Condition F: whether a position of the terminal device is located in a first area, where the first area is a validity area reported by the terminal device to the network device.

The first condition includes one or more of Condition A to Condition F. If the terminal device satisfies each of the first conditions, it is determined that the terminal device satisfies the first condition. If the terminal device does not satisfy any one of the first conditions, it is determined that the terminal device does not satisfy the first condition.

Taking the first condition including Condition A as an example, if the terminal device satisfies the low mobility evaluation criterion, it is determined that the first measurement result is valid; and otherwise, it is determined that the first measurement result is invalid.

Taking the first condition including Condition A and Condition D as an example, when the terminal device satisfies the low mobility evaluation criterion and the RSRP of the terminal device satisfies the preset RSRP threshold for determining the measurement validation, it is determined that the first measurement result is valid; and when the terminal device does not satisfy the low mobility evaluation criterion or the RSRP of the terminal device does not satisfy the preset RSRP threshold for determining the measurement validation, it is determined that the first measurement result is invalid.

In some embodiments, the first condition is configured by the network device; or the first condition is preset by the terminal device.

In the embodiments of the present disclosure, the terminal device reports the first measurement result and the first information to the network device, so that the network device determines the target measurement result based on the first measurement result and the first information.

Based on different contents included in the first information, reporting of the terminal device includes, but is not limited to, at least one of the following cases.

The terminal device reports the first measurement result and the first indication information to the network device, so that the network device determines the validation of the first measurement result through the first indication information. The target measurement result is a valid first measurement result.

The terminal device reports the first measurement result and the third measurement result to the network device, so that the network device determines the validation of the first measurement result by using the third measurement result as the reference condition or threshold, and the target measurement result is a valid first measurement result.

The terminal device reports the first measurement result and the third measurement result to the network device, so that the network device combines the third measurement result with the first measurement result to obtain the target measurement result.

The terminal device reports the first measurement result and the fourth measurement result to the network device, so that the network device combines the fourth measurement result with the first measurement result to obtain the target measurement result.

The terminal device reports the first measurement result, the first indication information, and the fourth measurement result to the network device, so that the network device determines a valid first measurement result based on the first indication information, and combines the valid first measurement result with the third measurement result to obtain the target measurement result.

The terminal device reports the first measurement result, the first indication information, the third measurement result, and the fourth measurement result to the network device, so that the network device determines a valid first measurement result based on the first indication information, and combines the valid first measurement result, the third measurement result and the fourth measurement result to obtain the target measurement result.

In some embodiments, a reporting time for the first measurement result is a first reporting time, a reporting time for the first information is a second reporting time, the first reporting time is located after the RRC setup/resume procedure is completed, and the second reporting time is located after the RRC setup/resume procedure is completed.

The second reporting time may include one or more time points.

If the second information includes one or more of the third measurement result/fifth measurement result, the fourth measurement result and the first indication information, the reporting time for the third measurement result/fifth measurement result, the fourth measurement result and the first indication information is the same or different from each other.

In some embodiments, a reporting time for the second measurement result is located after the RRC setup/resume procedure is completed; and/or, a reporting time for the first indication information is located within a duration of the RRC setup/resume procedure or located after the RRC setup/resume procedure is completed.

If the reporting time for the first indication information is located after the RRC setup/resume procedure is completed, the reporting time for the first indication information may be the same as the reporting time for the second measurement result.

If the second measurement result includes the third measurement result/fifth measurement result and the fourth measurement result, the reporting time for the third measurement result/fifth measurement result and the fourth measurement result may be the same or different.

It is to be understood that information having the same reporting time is reported to the network device together, and information having different reporting times is reported to the network device in sequence.

In some embodiments, the first measurement result is reported through a first message and the first information is reported through a second message. The first message is the same as or different from the second message.

In the embodiments of the present disclosure, the second messages corresponding to different information in the first information may be the same or different.

If the first information includes the third measurement result, the terminal device may report the first measurement result and the third measurement result to the network device through the same message or different messages.

If the first information includes the third measurement result and the fourth measurement result, the terminal device may report the first measurement result and the third measurement result to the network device through the same message, and report the fourth measurement result to the network device through another message.

If the first information includes the first indication information, the terminal device may report the first measurement result and the first indication information to the network device through different messages.

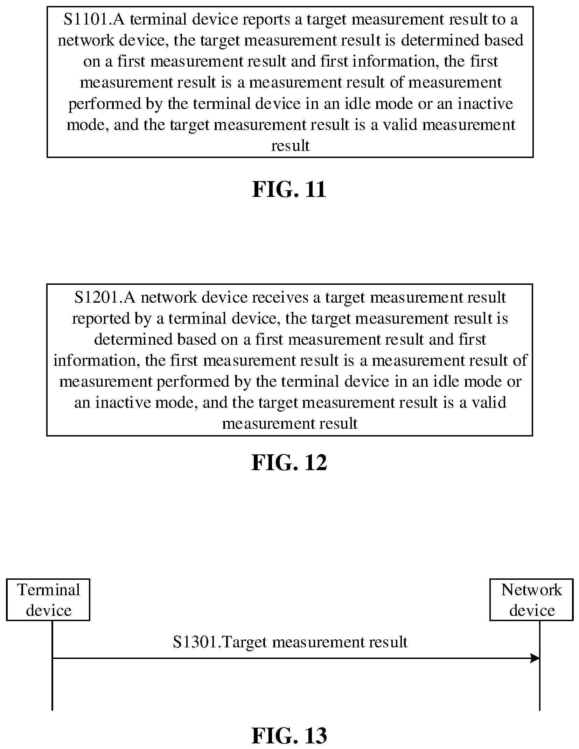

The embodiments of the present disclosure provide a method for measurement result reporting, which is applied to a terminal device. As illustrated in FIG. 11, the method includes the following operation in S1101.

In S1101, a terminal device reports a target measurement result to a network device, where the target measurement result is determined based on a first measurement result and first information, the first measurement result is a measurement result of measurement performed by the terminal device in an idle mode or an inactive mode, and the target measurement result is a valid measurement result.

The embodiments of the present disclosure provide a method for measurement result reporting, which is applied to a network device. As illustrated in FIG. 12, the method includes the following operation in S1201.

In S1201, a network device receives a target measurement result reported by a terminal device, where the target measurement result is determined based on a first measurement result and first information, the first measurement result is a measurement result of measurement performed by the terminal device in an idle mode or an inactive mode, and the target measurement result is a valid measurement result.

The embodiments of the present disclosure provide a method for measurement result reporting, which is applied to a wireless communication system including a terminal device and a network device. As illustrated in FIG. 13, the method includes the following operation in S1301.

In S1301, a network device receives a target measurement result reported by a terminal device.

The target measurement result is determined based on a first measurement result and first information, the first measurement result is a measurement result of measurement performed by the terminal device in an idle mode or an inactive mode, and the target measurement result is a valid measurement result.

The methods for measurement result reporting illustrated in FIG. 11 to FIG. 13 provided by the embodiments of the present disclosure will be described below.

The terminal device in the idle or inactive mode performs measurement, to obtain a first measurement result. It is to be understood that the terminal device may perform multiple measurements, and one first measurement result is obtained for each measurement. In the embodiments of the present disclosure, the terminal device obtains at least one first measurement result through at least one measurement.

After obtaining the first measurement result, the terminal device determines the target measurement result based on the first information and the first measurement result during the transition from the idle mode or the inactive mode to the connected mode or after entering the connected mode from the idle mode or the inactive mode.

The terminal device reports the target measurement result to the network device after the terminal device enters the connected mode from the idle mode or from the inactive mode based on the access. It is to be understood that the access may be understood as an access procedure performed when the terminal device transitions to be in the connected mode from the idle mode or the inactive mode, and the access includes random access, initial access, and the like. If the terminal device enters the connected mode from the idle mode, the terminal also performs a connection setup procedure during the access procedure. If the terminal device enters the connected mode from the inactive mode, the terminal also performs a connection resume procedure during the access procedure.

It is to be understood that a start time of the access procedure may be regarded as a start time of the connection setup/resume procedure; and an end time of the access procedure may be regarded as an end time of the connection setup/resume procedure.

In some embodiments, the first information includes at least one of:
a second measurement result determined based on a third measurement result and/or a fourth measurement result, where the third measurement result is a measurement result of measurement performed by the terminal device in an RRC setup/resume procedure, and the fourth measurement result is a measurement result of measurement performed by the terminal device after the RRC setup/resume procedure is completed; or
first indication information for indicating validation of the first measurement result.

The description of the first information may be referred to the description of the first information in the methods for measurement result reporting described in FIG. 6 to FIG. 8, which will not be repeatedly described herein.

In the methods for measurement result reporting illustrated in FIG. 6 to FIG. 8, the terminal device reports the first measurement result and the first information to the network device, and the network device determines the target measurement result based on the first information and the first measurement result. In the methods for measurement result reporting illustrated in FIG. 11 to FIG. 13, the terminal device determines the target measurement result based on the first information and the first measurement result, and reports the target measurement result to the network device. The manner in which the terminal device determines the target measurement result based on the first information and the first measurement result in the methods for measurement result reporting illustrated in FIG. 11 to FIG. 13 may be referred to the manner in which the network device determines the target measurement result based on the first information and the first measurement result in the methods for measurement result reporting illustrated in FIG. 6 to FIG. 8, which will not be repeatedly described herein.

In the case that the network device receives the target measurement result, the network device may directly use the target measurement result. It is to be understood that the target measurement result is used for cell selection/reselection or CA/DC configuration.

In the methods for measurement result reporting provided by the embodiments of the present disclosure, the terminal device determines the target measurement result based on the second measurement result and the first measurement result, and reports the target measurement result to the network device, so that the network device directly receives the valid measurement result.

The method for measurement result reporting provided by the embodiments of the present disclosure will be further described below.

Embodiments where the method for measurement result reporting provided by the embodiments of the present disclosure may be implemented include, but are not limited to, the following Embodiment 1 and Embodiment 2.

Embodiment 1: a terminal device performs validation of measurements from the start time msg1 to the end time msg4 of the RRC resume/setup procedure, to determine the valid measurement result.

First implementation: the terminal device performs new measurements to obtain new reference result(s), i.e., the third measurement result(s).

In the first implementation, the terminal device performs the measurements (i.e., the new measurements) in the RRC resume/setup procedure, to obtain the third measurement results.

The first implementation includes the following contents.

The end time of T331 is extended until a time when the msg4 is completed, or T331 is restarted to perform the EMR measurement or one shot measurement. The measurements performed in the RRC resume/setup procedure may use the measurement configuration in the idle/inactive mode, or the measurement configuration of the EMR, or a part of parameters (such as a new frequency point) of the measurement configuration of the one shot measurement, i.e., the second measurement configuration, may be updated by combining with the previous measurement configuration in the idle/inactive mode.

The obtained measurement results, i.e., the first reference results, along with the previous measurement results in the idle/inactive mode are reported to the network device together or in sequence in UE information after msg4 (i.e., completion of the RRC setup/resume). Alternatively, the first reference results are reported to the network device separately by using an UE indication.

Based on comparison of the above measurement results, the network device determines the validation of the measurement results, i.e., determines which measurement result is valid among the measurement results. In an example, the network device takes the measured value of RSRP/RSRQ/SINR of the reference results as a threshold and considers that an idle/inactive non-EMR or EMR measurement result close to or greater than this threshold is valid.

Second implementation: the terminal device determines an assisted indication (UE assisted indication).

The terminal device determines an assisted indication (i.e., first indication information) in the RRC resume/setup procedure, and reports the assisted indication to the network device.

The terminal device reports, in the msg1/3, to the network the assisted indication about whether the validation of the previous idle/inactive measurement results satisfy the conditions.

These conditions may be configured in advance by the network device when entering the idle/inactive mode, or preset by the terminal device. The conditions may include at least one of the following: whether the low mobility evaluation criterion is satisfied; whether the RSRP threshold is satisfied; whether a timeout duration of the timer T331 exceeds a threshold set by the network; whether the UE is moved outside the validity area previously reported to the network; or whether the measurement was taken during the last [X] seconds before the new measurement procedures perform.

In the UE information after msg4, the UE reports the idle/inactive measurement results, to enable the network device to determine the validation of the measurement results in combination with the assisted indication, and determines how to use the measurement results.

Embodiment 2: a terminal device performs validation of measurements after the end time msg4 of the RRC resume/setup procedure, to determine the valid measurement result.

The terminal device may continue to perform measurements after MSG4, to obtain the measurement result, i.e., the fourth measurement result, and use the fourth measurement result as a second reference result to determine the valid measurement result together with the idle/inactive measurement results.

The terminal device may still use the idle/inactive configuration or the RRC connected configuration for the measurements after MSG4.

Regardless of the configuration used, the terminal device may only measure the idle/inactive EMR carrier (or the carrier designated for the fast setup of the CA/DC).

The measurement results of the measurements after the MSG4 are used to determine the validation of the measurements, and may be combined with the measurement results of the previous idle EMR, which is processed by the network. The network device may perform the following processing on the measurement results of the measurements after the MSG4 and the measurement results of the idle EMR: filtering, weighted processing, deletion, etc.

In the measurement method provided by the embodiments of the present disclosure, the valid measurement result may be determined by using the reference measurement results, and the reference measurement results may be measurement results before or after the msg4, and the valid measurement result may also be determined by using the UE assisted indication. The assisted indication is determined based on some criterion conditions, such as: whether the network configuration is satisfied or whether the timeliness condition defined for the measurement results is satisfied.

The preferred embodiments of the present disclosure have been described in detail above with reference to the accompanying drawings, but the present disclosure is not limited to the specific details in the above embodiments. Within the scope of the technical concept of the present disclosure, various simple modifications may be made to the technical solutions of the present disclosure, and these simple modifications all fall within the scope of protection of the present disclosure. For example, various specific technical features described in the above specific embodiments may be combined in any suitable manner without contradiction, and various possible combinations will not be described separately in the present disclosure in order to avoid unnecessary repetition. For another example, various different embodiments of the present disclosure may be combined arbitrarily as long as the combination does not depart from the idea of the present disclosure, and the combination should also be regarded as the contents of the present disclosure. For another example, various embodiments and/or technical features of the various embodiments in the present disclosure may be combined with the related art in any manner without conflict, and the resulting technical solutions shall also fall within the scope of protection of the present disclosure.

It should also be understood that in various method embodiments of the present disclosure, a magnitude of a sequence number of each process does not mean an execution sequence and the execution sequence of each process should be determined by its function and an internal logic and should not form any limit to an implementation process of the embodiments of the present disclosure. Furthermore, in the embodiments of the present disclosure, the terms "downlink", "uplink" and "sidelink" are used to indicate a direction of transmission of signals or data, "downlink" is used to indicate that the signal or data is transmitted in a first direction from a station to UE of a cell, "uplink" is used to indicate that the signal or data is transmitted in a second direction from UE of a cell to a station, and "sidelink" is used to indicate that the signal or data is transmitted in a third direction from UE 1 to UE 2. For example, "downlink signal" indicates that the signal is transmitted in the first direction. Further, in the embodiments of the present disclosure, the term "and/or" is only an association relationship describing associated objects and represents that three relationships may exist. Specifically, A and/or B may represent three conditions: i.e., independent existence of A, existence of both A and B, and independent existence of B. In addition, character "/" in the present disclosure usually represents that previous and next associated objects form an "or" relationship.

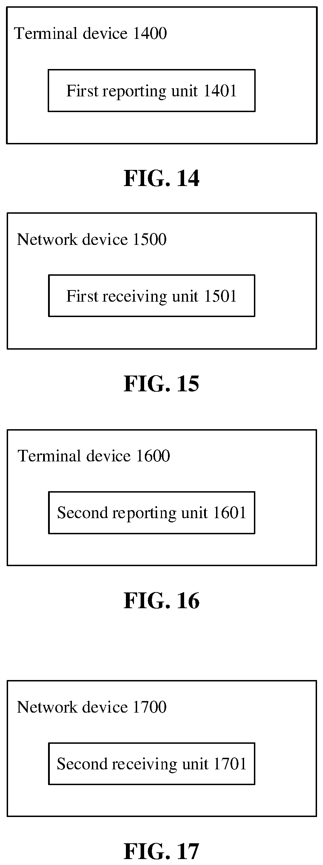

FIG. 14 is a first structural schematic diagram of an apparatus for measurement result reporting according to an embodiment of the present disclosure. The apparatus is applied to a terminal device. As illustrated in FIG. 14, the apparatus 1400 includes a first reporting unit 1401.

The first reporting unit 1401 is configured to report a first measurement result and first information to a network device. The first measurement result and the first information are used for determining a target measurement result, the target measurement result is a valid measurement result, and the first measurement result is a measurement result of measurement performed by the terminal device in an idle mode or an inactive mode.

It is to be understood that the apparatus 1400 may further include a measurement unit configured to perform measurement for obtaining the first measurement result.

In some embodiments, the first information includes at least one of a second measurement result or first indication information.

The second measurement result is determined based on a third measurement result and/or a fourth measurement result. The third measurement result is a measurement result of measurement performed by the terminal device during an RRC setup/resume procedure, and the fourth measurement result is a measurement result of measurement performed by the terminal device after the RRC setup/resume procedure is completed.

The first indication information indicates validation of the first measurement result.

In some embodiments, the third measurement result is a measurement result of measurement performed by the terminal device based on a first measurement configuration.

In some embodiments, the first measurement configuration includes at least one of: an idle measurement configuration, an Early Measurement Report (EMR) measurement configuration, or a second measurement configuration that is a measurement configuration configured in the RRC setup/resume procedure.

In some embodiments, the fourth measurement result is a measurement result of the measurement performed by the terminal device based on a third measurement configuration.

In some embodiments, the third measurement configuration includes at least one of: an idle measurement configuration; or a connected measurement configuration.

In some embodiments, the fourth measurement result is a measurement result for at least one first frequency, and the first frequency is a carrier frequency in an EMR measurement configuration or a frequency of a carrier for CA or DC.

In some embodiments, a stop time of a first timer is extended to a first time, or the first timer is restarted when the first timer stops, and the first timer is configured to control a valid duration of the idle measurement configuration.

In some embodiments, the second measurement result includes the third measurement result and/or the fourth measurement result.

In some embodiments, the third measurement result is used as a reference condition or threshold for determining the validation of the first measurement result; and/or, the third measurement result is combined with the first measurement result.

In some embodiments, if the second measurement result includes the fourth measurement result and/or a fifth measurement result, and the fifth measurement result is determined based on at least one of the third measurement result.

In some embodiments, the fifth measurement result is used as a reference condition or threshold for determining the validation of the first measurement result.

In some embodiments, the fourth measurement result is combined with the first measurement result.

In some embodiments, the first indication information is determined based on a first condition for determining the validation of the first measurement result.

In some embodiments, if the terminal device satisfies the first condition, the first indication information indicates that the first measurement result is valid; or, if the terminal device does not satisfy the first condition, the first indication information indicates that the first measurement result is invalid.

In some embodiments, the first condition includes at least one of:
the terminal device satisfies a low mobility evaluation criterion;
the terminal device satisfies a cell edge criterion;
the terminal device satisfies a channel quality criterion;
whether a Reference Signal Received Power (RSRP) of the terminal device satisfies a preset RSRP threshold for determining measurement validation;
whether a timeout duration of a first timer of the terminal device satisfies a first duration threshold, and the first timer is configured to control an available duration of the idle measurement configuration; or
whether the terminal device is located in a first area, and the first area is a validity area reported by the terminal device to the network device.

In some embodiments, the first condition is configured by the network device; or, the first condition is preset by the terminal device.

In some embodiments, a reporting time for the first measurement result is a first reporting time, a reporting time for the first information is a second reporting time, the first reporting time is located after the RRC setup/resume procedure is completed, and the second reporting time is located after the RRC setup/resume procedure is completed.

In some embodiments, a reporting time for the second measurement result is located after the RRC setup/resume procedure is completed; and/or a reporting time for the first indication information is located within a duration of the RRC setup/resume procedure or after the RRC setup/resume procedure is completed.

In some embodiments, the first measurement result is reported through a first message and the first information is reported through a second message, and the first message is the same as or different from the second message.

FIG. 15 is a second structural schematic diagram of an apparatus for measurement result reporting according to an embodiment of the present disclosure. The apparatus is applied to a network device. As illustrated in FIG. 15, the apparatus 1500 includes a first receiving unit 1501.

The first receiving unit 1501 is configured to receive a first measurement result and first information reported by a terminal device. The first measurement result and the first information are used for determining a target measurement result, the target measurement result is a valid measurement result, and the first measurement result is a measurement result of measurement performed by the terminal device in an idle mode or an inactive mode.

It is to be understood that the apparatus 1500 may further include a determining unit configured to determine a target measurement result based on the received first measurement result and first information.

In some embodiments, the first information includes at least one of a second measurement result or first indication information.

The second measurement result is determined based on a third measurement result and/or a fourth measurement result. The third measurement result is a measurement result of measurement performed by the terminal device during an RRC setup/resume procedure, and the fourth measurement result is a measurement result of measurement performed by the terminal device after the RRC setup/resume procedure is completed.

The first indication information indicates validation of the first measurement result.

In some embodiments, the third measurement result is a measurement result of measurement performed by the terminal device based on a first measurement configuration.

In some embodiments, the first measurement configuration includes at least one of: an idle measurement configuration; an EMR measurement configuration; or, a second measurement configuration that is a measurement configuration configured in the RRC setup/resume procedure.

In some embodiments, the fourth measurement result is a measurement result of the measurement performed by the terminal device based on a third measurement configuration.

In some embodiments, the third measurement configuration includes at least one of: an idle measurement configuration; or, a connected measurement configuration.

In some embodiments, the fourth measurement result is a measurement result for at least one first frequency, and the first frequency is a carrier frequency in an EMR measurement configuration or a frequency of a carrier for Carrier Aggregation (CA) or Dual Connectivity (DC).

In some embodiments, a stop time of a first timer is extended to a first time, or the first timer is restarted when the first timer stops, and the first timer is configured to control a valid duration of the idle measurement configuration.

In some embodiments, the second measurement result includes the third measurement result and/or the fourth measurement result.

In some embodiments, the third measurement result is used as a reference condition or threshold for determining the validation of the first measurement result; and/or, the third measurement result is combined with the first measurement result.

In some embodiments, if the second measurement result includes the fourth measurement result and/or a fifth measurement result, the fifth measurement result is determined based on at least one of the third measurement result.

In some embodiments, the fifth measurement result is used as a reference condition or threshold for determining the validation of the first measurement result.

In some embodiments, the fourth measurement result is combined with the first measurement result.

In some embodiments, the first indication information is determined based on a first condition for determining the validation of the first measurement result.

In some embodiments, if the terminal device satisfies the first condition, the first indication information indicates that the first measurement result is valid; or, if the terminal device does not satisfy the first condition, the first indication information indicates that the first measurement result is invalid.

In some embodiments, the first condition includes at least one of:
the terminal device satisfies a low mobility evaluation criterion;
the terminal device satisfies a cell edge criterion;
the terminal device satisfies a channel quality criterion;
whether a Reference Signal Received Power (RSRP) of the terminal device satisfies a preset RSRP threshold for determining measurement validation;
whether a timeout duration of a first timer of the terminal device satisfies a first duration threshold, and the first timer is configured to control an available duration of the idle measurement configuration; or
whether the terminal device is located in a first area, and the first area is a validity area reported by the terminal device to the network device.

In some embodiments, the first condition is configured by the network device; or, the first condition is preset by the terminal device.

In some embodiments, a reporting time for the first measurement result is a first reporting time, a reporting time for the first information is a second reporting time, the first reporting time is located after the RRC setup/resume procedure is completed, and the second reporting time is located after the RRC setup/resume procedure is completed.

In some embodiments, a reporting time for the second measurement result is located after the RRC setup/resume procedure is completed; and/or, a reporting time for the first indication information is located within a duration of the RRC setup/resume procedure or after the RRC setup/resume procedure is completed.

In some embodiments, the first measurement result is reported through a first message and the first information is reported through a second message, and the first message is the same as or different from the second message.

FIG. 16 is a second structural schematic diagram of an apparatus for measurement result reporting according to an embodiment of the present disclosure. The apparatus is applied to a network device. As illustrated in FIG. 16, the apparatus 1600 includes a second reporting unit 1601.

The second reporting unit 1601 is configured to report a target measurement result to a network device. The target measurement result is determined based on a first measurement result and first information, the first measurement result is a measurement result of measurement performed by the terminal device in an idle mode or an inactive mode, and the target measurement result is a valid measurement result.

It is to be understood that the apparatus 1600 may further include a measurement unit configured to perform measurements for obtaining the first measurement result and a second measurement result.

In some embodiments, the first information includes at least one of a second measurement result or first indication information.

The second measurement result is determined based on a third measurement result and/or a fourth measurement result, where the third measurement result is a measurement result of measurement performed by the terminal device during an RRC setup/resume procedure, and the fourth measurement result is a measurement result of measurement performed by the terminal device after the RRC setup/resume procedure is completed.

The first indication information indicates validation of the first measurement result.

In some embodiments, the third measurement result is a measurement result of measurement performed by the terminal device based on a first measurement configuration.

In some embodiments, the first measurement configuration includes at least one of: an idle measurement configuration; an Early Measurement Report (EMR) measurement configuration; or, a second measurement configuration that is a measurement configuration configured in the RRC setup/resume procedure.

In some embodiments, the fourth measurement result is a measurement result of measurement performed by the terminal device based on a third measurement configuration.

In some embodiments, the third measurement configuration includes at least one of:an idle measurement configuration; or, a connected measurement configuration.

In some embodiments, the fourth measurement result is a measurement result for at least one first frequency, and the first frequency is a carrier frequency in an EMR measurement configuration or a frequency of a carrier for Carrier Aggregation (CA) or Dual Connectivity (DC).

In some embodiments, a stop time of a first timer is extended to a first time, or the first timer is restarted when the first timer stops, and the first timer is configured to control a valid duration of the idle measurement configuration.

In some embodiments, the second measurement result includes the third measurement result and/or the fourth measurement result.

In some embodiments, the third measurement result is used as a reference condition or threshold for determining the validation of the first measurement result; and/or, the third measurement result is combined with the first measurement result.

In some embodiments, if the second measurement result includes the fourth measurement result and/or a fifth measurement result, the fifth measurement result is determined based on at least one of the third measurement result.

In some embodiments, the fifth measurement result is used as a reference condition or threshold for determining the validation of the first measurement result.

In some embodiments, the fourth measurement result is combined with the first measurement result.

In some embodiments, the first indication information is determined based on a first condition for determining the validation of the first measurement result.

In some embodiments, if the terminal device satisfies the first condition, the first indication information indicates that the first measurement result is valid; or, if the terminal device does not satisfy the first condition, the first indication information indicates that the first measurement result is invalid.

In some embodiments, the first condition includes at least one of:
the terminal device satisfies a low mobility evaluation criterion;
the terminal device satisfies a cell edge criterion;
the terminal device satisfies a channel quality criterion;
whether a Reference Signal Received Power (RSRP) of the terminal device satisfies a preset RSRP threshold for determining measurement validation;
whether a timeout duration of a first timer of the terminal device satisfies a first duration threshold, and the first timer is configured to control an available duration of the idle measurement configuration; or
whether a position of the terminal device is in a first area, and the first area is a validity area reported by the terminal device to the network device.

In some embodiments, the first condition is configured by the network device; or, the first condition is preset by the terminal device.

FIG. 17 is a fourth structural schematic diagram of an apparatus for measurement result reporting according to an embodiment of the present disclosure. The apparatus is applied to a network device. As illustrated in FIG. 17, the apparatus 1700 includes a second receiving unit 1701.

The second receiving unit 1701 is configured to receive a target measurement result reported by a terminal device. The target measurement result is determined based on a first measurement result and first information, the first measurement result is a measurement result of measurement performed by the terminal device in an idle mode or an inactive mode, and the target measurement result is a valid measurement result.

It is to be understood that the apparatus 1700 may further include a storage unit configured to store the received target measurement result.

It is to be understood that the apparatus 1700 may further include a processing unit configured to process the received target measurement result.

In some embodiments, the first information includes at least one of a second measurement result or first indication information.

The second measurement result is determined based on a third measurement result and/or a fourth measurement result, where the third measurement result is a measurement result of measurement performed by the terminal device during an RRC setup/resume procedure, and the fourth measurement result is a measurement result of measurement performed by the terminal device after the RRC setup/resume procedure is completed.

The first indication information indicates validation of the first measurement result.

In some embodiments, the third measurement result is a measurement result of measurement performed by the terminal device based on a first measurement configuration.

In some embodiments, the first measurement configuration includes at least one of: an idle measurement configuration; an Early Measurement Report (EMR) measurement configuration; or, a second measurement configuration that is a measurement configuration configured in the RRC setup/resume procedure.

In some embodiments, the fourth measurement result is a measurement result of measurement performed by the terminal device based on a third measurement configuration.

In some embodiments, the third measurement configuration includes at least one of: an idle measurement configuration; or a connected measurement configuration.

In some embodiments, the fourth measurement result is a measurement result for at least one first frequency, and the first frequency is a carrier frequency in an EMR measurement configuration or a frequency of a carrier for CA or DC.

In some embodiments, a stop time of a first timer is extended to a first time, or the first timer is restarted when the first timer stops, and the first timer is configured to control a valid duration of the idle measurement configuration.

In some embodiments, the second measurement result includes the third measurement result and/or the fourth measurement result.

In some embodiments, the third measurement result is used as a reference condition or threshold for determining the validation of the first measurement result; and/or, the third measurement result is combined with the first measurement result.

In some embodiments, if the second measurement result includes the fourth measurement result and/or a fifth measurement result, the fifth measurement result is determined based on at least one of the third measurement result.

In some embodiments, the fifth measurement result is used as a reference condition or threshold for determining the validation of the first measurement result.

In some embodiments, the fourth measurement result is combined with the first measurement result.

In some embodiments, the first indication information is determined based on a first condition for determining the validation of the first measurement result.

In some embodiments, if the terminal device satisfies the first condition, the first indication information indicates that the first measurement result is valid; or, if the terminal device does not satisfy the first condition, the first indication information indicates that the first measurement result is invalid.

In some embodiments, the first condition includes at least one of:
the terminal device satisfies a low mobility evaluation criterion;
the terminal device satisfies a cell edge criterion;
the terminal device satisfies a channel quality criterion;
whether a Reference Signal Received Power (RSRP) of the terminal device satisfies a preset RSRP threshold for determining measurement validation;
whether a timeout duration of a first timer of the terminal device satisfies a first duration threshold, and the first timer is configured to control an available duration of the idle measurement configuration; or
whether a position of the terminal device is in a first area, and the first area is a validity area reported by the terminal device to the network device.

In some embodiments, the first condition is configured by the network device; or, the first condition is preset by the terminal device.

Those skilled in the art should understand that the related description of the above apparatus for measurement result reporting according to the embodiments of the present disclosure may be understood with reference to the related description of the method for measurement result reporting according to the embodiments of the present disclosure.

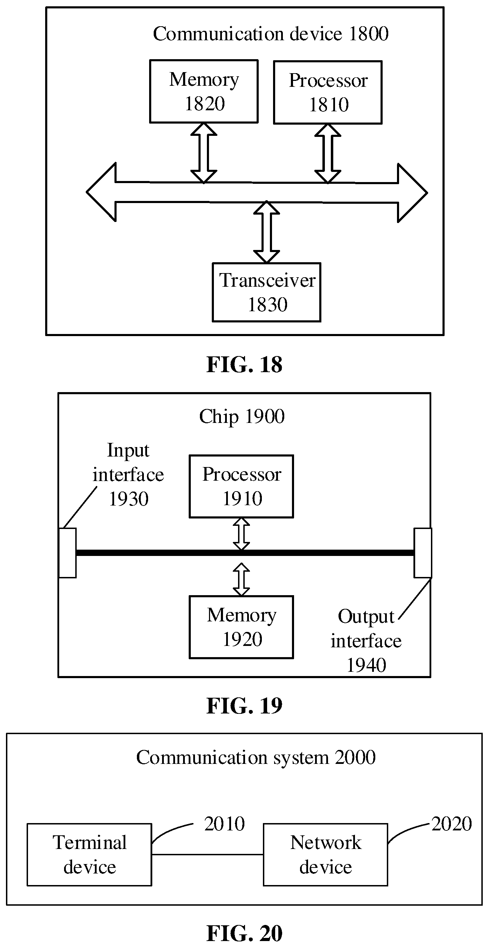

FIG. 18 is a schematic structural diagram of a communication device 1800 according to an embodiment of the present disclosure. The communication device may be a terminal device or a network device. The communication device 1800 illustrated in FIG. 18 includes a processor 1810. The processor 1810 may invoke and execute a computer program from a memory to implement the methods in the embodiments of the present disclosure.

In an embodiment, as illustrated in FIG. 18, the communication device 1800 may further include a memory 1820. The processor 1810 may invoke and execute a computer program from the memory 1820 to implement the methods in the embodiments of the present disclosure.

The memory 1820 may be a separate device independent of the processor 1810 or may be integrated into the processor 1810.

In an embodiment, as illustrated in FIG. 18, the communication device 1800 may further include a transceiver 1830. The processor 1810 may control the transceiver 1830 to communicate with other devices, in particular, to send information or data to other devices, or receive information or data sent by other devices.

The transceiver 1830 may include a transmitter and a receiver. The transceiver 1830 may further include an antenna(s), the number of which may be one or more.

In an embodiment, the communication device 1800 may specifically be a network device in the embodiments of the present disclosure, and the communication device 1800 may implement corresponding processes implemented by the network device in each method of the embodiments of the present disclosure, which will not be elaborated herein for simplicity.

In an embodiment, the communication device 1800 may specifically be a mobile terminal/terminal device in the embodiments of the present disclosure, and the communication device 1800 may implement corresponding processes implemented by the mobile terminal/terminal device in each method of the embodiments of the present disclosure, which will not be elaborated herein for simplicity.

FIG. 19 is a schematic structural diagram of a chip according to an embodiment of the present disclosure. The chip 1900 illustrated in FIG. 19 includes a processor 1910 that may invoke and execute a computer program from a memory to implement the methods in the embodiments of the present disclosure.

In an embodiment, as illustrated in FIG. 19, the chip 1900 may further include a memory 1920. The processor 1910 may invoke and execute a computer program from the memory 1920 to implement the methods in the embodiments of the present disclosure.

The memory 1920 may be a separate device independent of the processor 1910 or may be integrated into the processor 1910.

In an embodiment, the chip 1900 may further include an input interface 1930. The processor 1910 may control the input interface 1930 to communicate with other devices or chips, and in particular may obtain information or data sent by other devices or chips.

In an embodiment, the chip 1900 may further include an output interface 1940. The processor 1910 may control the output interface 1940 to communicate with other devices or chips, and in particular may output information or data to other devices or chips.

In an embodiment, the chip may be applied to the network device in the embodiments of the present disclosure, and the chip may implement the corresponding flows implemented by the network device in each method of the embodiments of the disclosure, which will not be elaborated herein for simplicity.

In an embodiment, the chip may be applied to the mobile terminal/terminal device in the embodiments of the present disclosure, and the chip may implement the corresponding flows implemented by the mobile terminal/terminal device in each method of the embodiments of the disclosure, which will not be elaborated herein for simplicity.

It is to be understood that the chip mentioned in the embodiments of the present disclosure may also be referred to as a system-level chip, a system chip, a chip system, a system-on-chip, or the like.

FIG. 20 is a schematic block diagram of a communication system 2000 according to an embodiment of the present disclosure. As illustrated in FIG. 20, the communication system 2000 includes a terminal device 2010 and a network device 2020.

The terminal device 2010 may be configured to implement the corresponding functions implemented by the terminal device in the above methods, and the network device 2020 may be configured to implement the corresponding functions implemented by the network device in the above methods, which will not be elaborated herein for simplicity.

It is to be understood that in embodiments of the present disclosure, the processor may be an integrated circuit chip and has a signal processing capability. During an implementation process, each operation in the above method embodiments may be completed via an integrated logic circuit of hardware in the processor or an instruction in a software form. The processor may be a universal processor, a Digital Signal Processor (DSP), an Application Specific Integrated Circuit (ASIC) and a Field Programmable Gate Array (FPGA) or other programmable logic devices, discrete gates or transistor logic devices, and discrete hardware component. Each method, operation and logic block diagram disclosed in the embodiments of the disclosure may be implemented or executed. The universal processor may be a microprocessor or the processor may also be any conventional processor and the like. The operations of the methods disclosed in combination with the embodiments of the disclosure may be directly embodied to be executed and completed by a hardware decoding processor or executed and completed by a combination of hardware and software modules in the decoding processor. The software module may be located in a mature storage medium in the art, such as a Random Access Memory (RAM), a flash memory, a Read-Only Memory (ROM), a Programmable ROM (PROM), an Electrically EPROM (EEPROM) or a register. The storage medium is located in the memory. The processor reads information from the memory and completes the operations of the foregoing methods in combination with the hardware of the processor.

It is to be understood that the memory in the embodiments of the present disclosure may be a volatile memory or a non-volatile memory, or may include both volatile and non-volatile memories. The non-volatile memory may be a ROM, a PROM, an Erasable PROM (EPROM), an Electrically EPROM (EEPROM), or a flash memory. The volatile memory may be a Random Access Memory (RAM) used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory of the system and method described in the present disclosure is intended to include, but not limited to, memories of these and any other proper types.

It is to be understood that the above memory is exemplarily but unlimitedly described. For example, the memory in the embodiments of the present disclosure may also be an SRAM, a DRAM, an SDRAM, a DDR SDRAM, an ESDRAM, an SLDRAM, a DR RAM, and the like. That is, the memory in the embodiments of the present disclosure is intended to include but not limited to memories of these and any other proper types.

The embodiments of the disclosure further provide a computer-readable storage medium, which is configured to store a computer program.

In an embodiment, the computer-readable storage medium may be applied to the network device in the embodiments of the disclosure. The computer program enables a computer to execute corresponding flows implemented by the network device in each method of the embodiments of the disclosure, which will not be elaborated here for simplicity.

In an embodiment, the computer-readable storage medium may be applied to the mobile terminal/terminal device in the embodiments of the disclosure. The computer program enables a computer to execute corresponding flows implemented by the mobile terminal/terminal device in each method of the embodiments of the disclosure, which will not be elaborated here for simplicity.

The embodiments of the disclosure further provide a computer program product, which includes computer program instructions.

In an embodiment, the computer program product may be applied to a network device in the embodiments of the disclosure. The computer program instructions enable a computer to execute corresponding flows implemented by the network device in each method of the embodiments of the disclosure, which will not be elaborated here for simplicity.

In an embodiment, the computer program product may be applied to the mobile terminal/terminal device in the embodiments of the disclosure. The computer program instructions enable a computer to execute corresponding flows implemented by the mobile terminal/terminal device in each method of the embodiments of the disclosure, which will not be elaborated herein for simplicity.

The embodiments of the disclosure further provide a computer program.

In an embodiment, the computer program may be applied to the network device in the embodiments of the disclosure. The computer program, when running on a computer, enables the computer to execute corresponding flows implemented by the network device in each method of the embodiments of the disclosure, which will not be elaborated herein for simplicity.

In an embodiment, the computer program may be applied to the mobile terminal/terminal device in the embodiments of the disclosure. When running on a computer, the computer program enables the computer to execute corresponding flows implemented by the mobile terminal/terminal device in each method of the embodiments of the disclosure, which will not be elaborated here for simplicity.

Those of ordinary skill in the art may realize that the units and algorithm operations of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

Those skilled in the art may clearly learn about that specific working processes of the system, apparatus and unit described above may refer to the corresponding processes in the method embodiments and will not be elaborated herein for convenient and brief description.

In some embodiments provided by the present disclosure, it is to be understood that the disclosed system, apparatus and method may be implemented in another manner. For example, the apparatus embodiments described above are only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the present disclosure may be integrated into a processing unit, each unit may also physically exist independently, and two or more than two units may also be integrated into a unit.

When being realized in form of software functional unit and sold or used as an independent product, the function may be stored in a computer-readable storage medium. Based on such an understanding, the technical solutions of the present disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the present disclosure. The abovementioned storage medium includes: various media capable of storing program codes such as a U disk, a mobile hard disk, a ROM, a RAM, a magnetic disk or an optical disk.

The above is only the specific implementation of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

## Claims

1. A method for measurement result reporting, comprising:
reporting, by a terminal device, a first measurement result and first information to a network device, wherein the first measurement result and the first information are used for determining a target measurement result, the target measurement result is a valid measurement result, and the first measurement result is a measurement result of measurement performed by the terminal device in an idle mode or an inactive mode.

2. The method of claim 1, wherein the first information comprises at least one of:
a second measurement result determined based on a third measurement result and/or a fourth measurement result, wherein the third measurement result is a measurement result of measurement performed by the terminal device during a Radio Resource Control, RRC, setup/resume procedure, and the fourth measurement result is a measurement result of measurement performed by the terminal device after the RRC setup/resume procedure is completed; or
first indication information indicating validation of the first measurement result.

3. The method of claim 2, wherein the third measurement result is a measurement result of the measurement performed by the terminal device based on a first measurement configuration.

4. The method of claim 3, wherein the first measurement configuration comprises at least one of:
an idle measurement configuration;
an Early Measurement Report, EMR, measurement configuration; or
a second measurement configuration that is a measurement configuration configured in the RRC setup/resume procedure.

5. The method of claim 2, wherein the fourth measurement result is a measurement result of the measurement performed by the terminal device based on a third measurement configuration.

6. The method of claim 5, wherein the third measurement configuration comprises at least one of:
an idle measurement configuration; or
a connected measurement configuration.

7. The method of claim 6, wherein the fourth measurement result is a measurement result for at least one first frequency, and the first frequency is a carrier frequency in an EMR measurement configuration or a frequency of a carrier for Carrier Aggregation, CA, or Dual Connectivity, DC.

8. The method of claim 4 or 6, wherein a stop time of a first timer is extended to a first time, or the first timer is restarted when the first timer stops, and the first timer is configured to control a valid duration of the idle measurement configuration.

9. The method of any one of claims 2 to 8, wherein the second measurement result comprises the third measurement result and/or the fourth measurement result.

10. The method of claim 9, wherein the third measurement result is used as a reference condition or threshold for determining the validation of the first measurement result; and/or
the third measurement result is combined with the first measurement result.

11. The method of any one of claims 2 to 8, wherein if the second measurement result comprises the fourth measurement result and/or a fifth measurement result, and the fifth measurement result is determined based on at least one third measurement result.

12. The method of claim 11, wherein the fifth measurement result is used as a reference condition or threshold for determining the validation of the first measurement result.

13. The method of any one of claims 9 to 12, wherein the fourth measurement result is combined with the first measurement result.

14. The method of any one of claims 2 to 13, wherein the first indication information is determined based on a first condition for determining the validation of the first measurement result.

15. The method of claim 14, wherein if the terminal device satisfies the first condition, the first indication information indicates that the first measurement result is valid; or
if the terminal device does not satisfy the first condition, the first indication information indicates that the first measurement result is invalid.

16. The method of claim 14 or 15, wherein the first condition comprises at least one of:
the terminal device satisfies a low mobility evaluation criterion;
the terminal device satisfies a cell edge criterion;
the terminal device satisfies a channel quality criterion;
whether a Reference Signal Received Power, RSRP, of the terminal device satisfies a preset RSRP threshold for determining measurement validation;
whether a timeout duration of a first timer of the terminal device satisfies a first duration threshold, and the first timer is configured to control an available duration of an idle measurement configuration; or
whether the terminal device is located in a first area, and the first area is a validity area reported by the terminal device to the network device.

17. The method of any one of claims 14 to 16, wherein the first condition is configured by the network device; or
the first condition is preset by the terminal device.

18. The method of any one of claims 2 to 17, wherein a reporting time for the first measurement result is a first reporting time, a reporting time for the first information is a second reporting time, the first reporting time is located after the RRC setup/resume procedure is completed, and the second reporting time is located after the RRC setup/resume procedure is completed.

19. The method of claim 18, wherein a reporting time for the second measurement result is located after the RRC setup/resume procedure is completed; and/or
a reporting time for the first indication information is located within a duration of the RRC setup/resume procedure or after the RRC setup/resume procedure is completed.

20. The method of any one of claims 2 to 19, wherein the first measurement result is reported through a first message and the first information is reported through a second message, and the first message is the same as or different from the second message.

21. A method for measurement result reporting, comprising:
receiving, by a network device, a first measurement result and first information reported by a terminal device, wherein the first measurement result and the first information are used for determining a target measurement result, the target measurement result is a valid measurement result, and the first measurement result is a measurement result of measurement performed by the terminal device in an idle mode or an inactive mode.

22. The method of claim 21, wherein the first information comprises at least one of:
a second measurement result determined based on a third measurement result and/or a fourth measurement result, wherein the third measurement result is a measurement result of measurement performed by the terminal device during a Radio Resource Control, RRC, setup/resume procedure, and the fourth measurement result is a measurement result of measurement performed by the terminal device after the RRC setup/resume procedure is completed; or
first indication information indicating validation of the first measurement result.

23. The method of claim 22, wherein the third measurement result is a measurement result of the measurement performed by the terminal device based on a first measurement configuration.

24. The method of claim 23, wherein the first measurement configuration comprises at least one of:
an idle measurement configuration;
an Early Measurement Report, EMR, measurement configuration; or
a second measurement configuration that is a measurement configuration configured in the RRC setup/resume procedure.

25. The method of claim 22, wherein the fourth measurement result is a measurement result of measurement performed by the terminal device based on a third measurement configuration.

26. The method of claim 25, wherein the third measurement configuration comprises at least one of:
an idle measurement configuration; or
a connected measurement configuration.

27. The method of claim 26, wherein the fourth measurement result is a measurement result for at least one first frequency, and the first frequency is a carrier frequency in an EMR measurement configuration or a frequency of a carrier for Carrier Aggregation, CA, or Dual Connectivity, DC.

28. The method of claim 24 or 26, wherein a stop time of a first timer is extended to a first time, or the first timer is restarted when the first timer stops, and the first timer is configured to control a valid duration of the idle measurement configuration.

29. The method of any one of claims 22 to 28, wherein the second measurement result comprises the third measurement result and/or the fourth measurement result.

30. The method of claim 29, wherein the fourth measurement result is used as a reference condition or threshold for determining the validation of the first measurement result, or the fourth measurement result is combined with the first measurement result.

31. The method of any one of claims 22 to 28, wherein if the second measurement result comprises the fourth measurement result and/or the target measurement result, the target measurement result is determined based on at least one third measurement result.

32. The method of claim 31, wherein the fifth measurement result is used as a reference condition or threshold for determining the validation of the first measurement result.

33. The method of any one of claims 29 to 32, wherein the fourth measurement result is combined with the first measurement result.

34. The method of any one of claims 22 to 33, wherein the first indication information is determined based on a first condition for determining the validation of the first measurement result.

35. The method of claim 34, wherein if the terminal device satisfies the first condition, the first indication information indicates that the first measurement result is valid; or
if the terminal device does not satisfy the first condition, the first indication information indicates that the first measurement result is invalid.

36. The method of claim 34 or 35, wherein the first condition comprises at least one of:
the terminal device satisfies a low mobility evaluation criterion;
the terminal device satisfies a cell edge criterion;
the terminal device satisfies a channel quality criterion;
whether a Reference Signal Received Power (RSRP) of the terminal device satisfies a preset RSRP threshold for determining measurement validation;
whether a timeout duration of a first timer of the terminal device satisfies a first duration threshold, and the first timer is configured to control an available duration of an idle measurement configuration; or
whether the terminal device is located in a first area, and the first area is a validity area reported by the terminal device to the network device.

37. The method of any one of claims 34 to 36, wherein the first condition is configured by the network device; or
the first condition is preset by the terminal device.

38. The method of any one of claims 21 to 37, wherein a reporting time for the first measurement result is a first reporting time, a reporting time for the first information is a second reporting time, the first reporting time is located after the RRC setup/resume procedure is completed, and the second reporting time is located after the RRC setup/resume procedure is completed.

39. The method of claim 38, wherein a reporting time for the second measurement result is located after the RRC setup/resume procedure is completed; and/or
a reporting time for the first indication information is located within a duration of the RRC setup/resume procedure or after the RRC setup/resume procedure is completed.

40. The method of any one of claims 21 to 39, wherein the first measurement result is reported through a first message and the first information is reported through a second message, and the first message is the same as or different from the second message.

41. A method for measurement result reporting, comprising:
reporting, by a terminal device, a target measurement result to a network device, wherein the target measurement result is determined based on a first measurement result and first information, the first measurement result is a measurement result of measurement performed by the terminal device in an idle mode or an inactive mode, and the target measurement result is a valid measurement result.

42. The method of claim 41, wherein the first information comprises at least one of:
a second measurement result determined based on a third measurement result and/or a fourth measurement result, wherein the third measurement result is a measurement result of measurement performed by the terminal device during a Radio Resource Control (RRC) setup/resume procedure, and the fourth measurement result is a measurement result of measurement performed by the terminal device after the RRC setup/resume procedure is completed; or
first indication information indicating validation of the first measurement result.

43. The method of claim 42, wherein the third measurement result is a measurement result of the measurement performed by the terminal device based on a first measurement configuration.

44. The method of claim 43, wherein the first measurement configuration comprises at least one of:
an idle measurement configuration;
an Early Measurement Report (EMR) measurement configuration; or
a second measurement configuration that is a measurement configuration configured in the RRC setup/resume procedure.

45. The method of claim 42, wherein the fourth measurement result is a measurement result of the measurement performed by the terminal device based on a third measurement configuration.

46. The method of claim 45, wherein the third measurement configuration comprises at least one of:
an idle measurement configuration; or
a connected measurement configuration.

47. The method of claim 46, wherein the fourth measurement result is a measurement result for at least one first frequency, and the first frequency is a carrier frequency in an EMR measurement configuration or a frequency of a carrier for Carrier Aggregation (CA) or Dual Connectivity (DC).

48. The method of claim 44 or 46, wherein a stop time of a first timer is extended to a first time, or the first timer is restarted when the first timer stops, and the first timer is configured to control a valid duration of the idle measurement configuration.

49. The method of any one of claims 42 to 48, wherein the second measurement result comprises the third measurement result and/or the fourth measurement result.

50. The method of claim 49, wherein the third measurement result is used as a reference condition or threshold for determining the validation of the first measurement result; and/or
the third measurement result is combined with the first measurement result.

51. The method of any one of claims 42 to 48, wherein if the second measurement result comprises the fourth measurement result and/or a fifth measurement result, the fifth measurement result is determined based on at least one third measurement result.

52. The method of claim 51, wherein the fifth measurement result is used as a reference condition or threshold for determining the validation of the first measurement result.

53. The method of any one of claims 49 to 52, wherein the fourth measurement result is combined with the first measurement result.

54. The method of any one of claims 42 to 53, wherein the first indication information is determined based on a first condition for determining the validation of the first measurement result.

55. The method of claim 54, wherein if the terminal device satisfies the first condition, the first indication information indicates that the first measurement result is valid; or
if the terminal device does not satisfy the first condition, the first indication information indicates that the first measurement result is invalid.

56. The method of claim 54 or 55, wherein the first condition comprises at least one of:
the terminal device satisfies a low mobility evaluation criterion;
the terminal device satisfies a cell edge criterion;
the terminal device satisfies a channel quality criterion;
whether a Reference Signal Received Power (RSRP) of the terminal device satisfies a preset RSRP threshold for determining measurement validation;
whether a timeout duration of a first timer of the terminal device satisfies a first duration threshold, and the first timer is configured to control an available duration of an idle measurement configuration; or
whether the terminal device is located in a first area, and the first area is a validity area reported by the terminal device to the network device.

57. The method of any one of claims 54 to 56, wherein the first condition is configured by the network device; or
the first condition is preset by the terminal device.

58. A method for measurement result reporting, comprising:
receiving, by a network device, a target measurement result reported by a terminal device, wherein the target measurement result is determined based on a first measurement result and first information, and the first measurement result is a measurement result of measurement performed by the terminal device in an idle mode or an inactive mode.

59. The method of claim 58, wherein the first information comprises at least one of:
a second measurement result determined based on a third measurement result and/or a fourth measurement result, wherein the third measurement result is a measurement result of measurement performed by the terminal device during a Radio Resource Control (RRC) setup/resume procedure, and the fourth measurement result is a measurement result of measurement performed by the terminal device after the RRC setup/resume procedure is completed; or
first indication information indicating validation of the first measurement result.

60. The method of claim 59, wherein the third measurement result is a measurement result of the measurement performed by the terminal device based on a first measurement configuration.

61. The method of claim 60, wherein the first measurement configuration comprises at least one of:
an idle measurement configuration;
an Early Measurement Report (EMR) measurement configuration; or
a second measurement configuration that is a measurement configuration configured in the RRC setup/resume procedure.

62. The method of claim 59, wherein the fourth measurement result is a measurement result of the measurement performed by the terminal device based on a third measurement configuration.

63. The method of claim 62, wherein the third measurement configuration comprises at least one of:
an idle measurement configuration; or
a connected measurement configuration.

64. The method of claim 63, wherein the fourth measurement result is a measurement result for at least one first frequency, and the first frequency is a carrier frequency in an EMR measurement configuration or a frequency of a carrier for Carrier Aggregation (CA) or Dual Connectivity (DC).

65. The method of claim 62 or 63, wherein a stop time of a first timer is extended to a first time, or the first timer is restarted when the first timer stops, and the first timer is configured to control a valid duration of the idle measurement configuration.

66. The method of any one of claims 59 to 65, wherein the second measurement result comprises the third measurement result and/or the fourth measurement result.

67. The method of claim 66, wherein the third measurement result is used as a reference condition or threshold for determining the validation of the first measurement result; and/or
the third measurement result is combined with the first measurement result.

68. The method of any one of claims 59 to 65, wherein if the second measurement result comprises the fourth measurement result and/or a fifth measurement result, the fifth measurement result is determined based on at least one third measurement result.

69. The method of claim 68, wherein the fifth measurement result is used as a reference condition or threshold for determining the validation of the first measurement result.

70. The method of any one of claims 66 to 69, wherein the fourth measurement result is combined with the first measurement result.

71. The method of any one of claims 59 to 70, wherein the first indication information is determined based on a first condition for determining the validation of the first measurement result.

72. The method of claim 71, wherein if the terminal device satisfies the first condition, the first indication information indicates that the first measurement result is valid; or
if the terminal device does not satisfy the first condition, the first indication information indicates that the first measurement result is invalid.

73. The method of claim 71 or 72, wherein the first condition comprises at least one of:
the terminal device satisfies a low mobility evaluation criterion;
the terminal device satisfies a cell edge criterion;
the terminal device satisfies a channel quality criterion;
whether a Reference Signal Received Power (RSRP) of the terminal device satisfies a preset RSRP threshold for determining measurement validation;
whether a timeout duration of a first timer of the terminal device satisfies a first duration threshold, and the first timer is configured to control an available duration of an idle measurement configuration; or
whether the terminal device is located in a first area, and the first area is a validity area reported by the terminal device to the network device.

74. The method of any one of claims 71 to 73, wherein the first condition is configured by the network device; or
the first condition is preset by the terminal device.

75. An apparatus for measurement result reporting, comprising:
a first reporting unit, configured to report a first measurement result and first information to a network device, wherein the first measurement result and the first information are used for determining a target measurement result, the target measurement result is a valid measurement result, and the first measurement result is a measurement result of measurement performed by a terminal device in an idle mode or an inactive mode.

76. An apparatus for measurement result reporting, comprising:
a first receiving unit, configured to receive a first measurement result and first information reported by a terminal device, wherein the first measurement result and the first information are used for determining a target measurement result, the target measurement result is a valid measurement result, and the first measurement result is a measurement result of measurement performed by the terminal device in an idle mode or an inactive mode.

77. An apparatus for measurement result reporting, comprising:
a second reporting unit, configured to report a target measurement result to a network device, wherein the target measurement result is determined based on a first measurement result and first information, the first measurement result is a measurement result of measurement performed by a terminal device in an idle mode or an inactive mode, and the target measurement result is a valid measurement result.

78. An apparatus for measurement result reporting, comprising:
a second receiving unit, configured to receive a target measurement result reported by a terminal device, wherein the target measurement result is determined based on a first measurement result and first information, the first measurement result is a measurement result of measurement performed by the terminal device in an idle mode or an inactive mode, and the target measurement result is a valid measurement result.

79. A terminal device, comprising: a processor and a memory, wherein the memory is configured to store a computer program, and the processor is configured to invoke and execute the computer program stored in the memory to perform the method of any one of claims 1 to 20, or perform the method of any one of claims 41 to 57.

80. A network device, comprising: a processor and a memory, wherein the memory is configured to store a computer program, and the processor is configured to invoke and execute the computer program stored in the memory to perform the method of any one of claims 21 to 40, or perform the method of any one of claims 58 to 74.

81. A chip, comprising: a processor configured to invoke and execute a computer program from a memory, to enable a device installed with the chip to perform the method of any one of claims 1 to 20, or perform the method of any one of claims 21 to 40, or perform the method of any one of claims s 41 to 57, or perform the method of any one of claims 58 to 74.

82. A computer-readable storage medium, configured to store a computer program, wherein execution of the computer program causes a computer to perform the method of any one of claims 1 to 20, or perform the method of any one of claims 21 to 40, or perform the method of any one of claims 41 to 57, or perform the method of any one of claims 58 to 74.

83. A computer program product, comprising computer program instructions, wherein execution of the computer program instructions causes a computer to perform the method of any one of claims 1 to 20, or perform the method of any one of claims 21 to 40, or perform the method of any one of claims 41 to 57, or perform the method of any one of claims 58 to 74.

84. A computer program, wherein execution of the computer program causes a computer to perform the method of any one of claims 1 to 20, or perform the method of any one of claims 21 to 40, or perform the method of any one of claims 41 to 57, or perform the method of any one of claims 58 to 74.
